# EUROPEAN PATENT APPLICATION

(11) **EP 4 597 905 A1**
(43) Date of publication of application: **06.08.2025**
(21) Application number: 23887951.4
(22) Date of filing: 06.11.2023
(51) Int. Cl.: H04L 5/00

(54) **DATA MAPPING METHOD, COMMUNICATION NODE, AND STORAGE MEDIUM**

(30) Priority: 07.11.2022 CN 202211391426
(71) Applicant: ZTE Corporation, Shenzhen, Guangdong 518057 (CN)
(72) Inventor: MIAO, Ting, Shenzhen, Guangdong 518057 (CN); LU, Youxiong, Shenzhen, Guangdong 518057 (CN); CHEN, Jie, Shenzhen, Guangdong 518057 (CN); XING, Weimin, Shenzhen, Guangdong 518057 (CN); HE, Haigang, Shenzhen, Guangdong 518057 (CN)
(74) Representative: Aipex B.V.
(86) International application number: PCT/CN2023/129909
(87) International publication number: WO 2024/099261

(57) **Abstract**

Provided are a data mapping method, a communication node, and a storage medium. The method includes: generating mapping data on Xₘ symbols according to Lₘ consecutive symbols starting from the m-th candidate start symbol; and mapping the mapping data on the Xₘ symbols to Lₙ consecutive symbols starting from the n-th candidate start symbol. m and n are each a positive integer less than or equal to N, N denotes the number of candidate start symbols in a slot, N is greater than 1, Xₘ = Lₘ - Aₘ, Aₘ = 1 or Aₘ = N - m + 1, Lₖ denotes the total number of symbols for physical sidelink control channel, PSCCH, transmission or physical sidelink shared channel, PSSCH, transmission starting from the k-th candidate start symbol in the slot, and k is a positive integer less than or equal to N.

## Description

### TECHNICAL FIELD

The present application relates to the field of communications, for example, a data mapping method, a communication node, and a storage medium.

### BACKGROUND

In a slot, the sidelink (SL) transmission must start from a configured or preconfigured start symbol (that is, the start orthogonal frequency-division multiplexing (OFDM) symbol). If the user equipment (UE) fails to listen before talk (LBT) before the start symbol of the SL transmission in the slot, the UE loses the transmission opportunity in the slot. Currently, to increase the chance of the UE successfully accessing a channel in a slot, in an unlicensed frequency band, one slot may include multiple candidate start symbols. Before the UE sends the physical sidelink shared channel (PSSCH), the UE needs to determine the transport block size (TBS). However, when one slot includes multiple candidate start symbols, since the sizes of physical resources for the PSSCH transmission corresponding to different candidate start symbols are different, the data mapped to the physical resources and generated by the PSSCH transmission corresponding to different candidate start symbols is also different. When preparing PSSCH transmission data, the UE does not know before which candidate start symbol in the slot LBT succeeds, resulting in the inability to prepare in advance the data mapped to the physical resources corresponding to the PSSCH transmission in the slot. Therefore, when one slot includes multiple candidate start symbols, how the UE performs data mapping is a problem that needs to be solved urgently.

### SUMMARY

Embodiments of the present application provide a data mapping method. The method includes the following:

Mapping data on Xₘ symbols is generated according to Lₘ consecutive symbols starting from the m-th candidate start symbol.

The mapping data on the Xₘ symbols is mapped to Lₙ consecutive symbols starting from the n-th candidate start symbol.

m and n are each a positive integer less than or equal to N, N denotes the number of candidate start symbols in a slot, N is greater than 1, Xₘ = Lₘ - Aₘ, Aₘ = 1 or Aₘ = N - m + 1, Lₖ denotes the total number of symbols for physical sidelink control channel (PSCCH) transmission or physical sidelink shared channel (PSSCH) transmission starting from the k-th candidate start symbol in the slot, and k is a positive integer less than or equal to N.

An embodiment of the present application provides a communication node. The communication node includes a processor configured to perform the method of any previous embodiment when executing a computer program.

An embodiment of the present application provides a computer-readable storage medium storing a computer program which, when executed by a processor, causes the processor to perform the method of any previous embodiment.

The preceding embodiments and other aspects of the present application and implementations thereof are described in more detail in the brief description of drawings, detailed description, and claims.

### BRIEF DESCRIPTION OF DRAWINGS

FIG. 1 is a schematic diagram of a conventional slot structure of an SL without a physical sidelink feedback channel (PSFCH) according to an embodiment.
FIG. 2 is a schematic diagram of a conventional slot structure of an SL with a PSFCH according to an embodiment.
FIG. 3 is a flowchart of a data mapping method according to an embodiment.
FIG. 4 is a schematic diagram of a first type of data mapping according to an embodiment.
FIG. 5 is a schematic diagram of a second type of data mapping according to an embodiment.
FIG. 6 is a schematic diagram of a third type of data mapping according to an embodiment.
FIG. 7 is a schematic diagram of a fourth type of data mapping according to an embodiment.
FIG. 8 is a schematic diagram of a fifth type of data mapping according to an embodiment.
FIG. 9 is a schematic diagram of a sixth type of data mapping according to an embodiment.
FIG. 10 is a schematic diagram of a seventh type of data mapping according to an embodiment.
FIG. 11 is a schematic diagram of an eighth type of data mapping according to an embodiment.
FIG. 12 is a schematic diagram of a ninth type of data mapping according to an embodiment.
FIG. 13 is a schematic diagram of a tenth type of data mapping according to an embodiment.
FIG. 14 is a schematic diagram of an eleventh type of data mapping according to an embodiment.
FIG. 15 is a schematic diagram of a twelfth type of data mapping according to an embodiment.
FIG. 16 is a schematic diagram of a thirteenth type of data mapping according to an embodiment.
FIG. 17 is a diagram illustrating the structure of a data mapping apparatus according to an embodiment.
FIG. 18 is a diagram illustrating the structure of a UE according to an embodiment.
FIG. 19 is a diagram illustrating the structure of a base station (or a higher-layer entity) according to an embodiment.

### DETAILED DESCRIPTION

It is to be understood that the embodiments described herein are intended to explain the present application, not to limit the present application. Embodiments of the present application are described hereinafter in detail in conjunction with drawings.

For the SL communication on the unlicensed frequency band, before using the channel on the unlicensed spectrum to send data, the UE needs to perform a channel access process (that is, monitor whether the channel is idle). The channel access process follows the principle of LBT, that is, LBT (also known as channel monitoring) needs to be performed first. Only when LBT succeeds (that is, the channel monitoring result is that the channel is idle) can the UE use the channel to transmit data. If LBT fails (that is, the channel monitoring result is that the channel is busy), the UE cannot transmit data through the channel.

In a slot, the SL transmission must start from a configured or preconfigured start symbol. If the UE fails to LBT before the start symbol of the SL transmission in the slot, the UE loses the transmission opportunity in the slot. In addition, other wireless network communication (for example, Wi-Fi) devices can transmit data in the unlicensed frequency band at any time as long as LBT succeeds, so the chance of LBT succeeding for the SL transmission is greatly reduced compared to the chance of LBT succeeding for the Wi-Fi devices.

The SL channels mainly include a physical sidelink control channel (PSCCH), a PSSCH, a PSFCH, a sidelink synchronization signals/physical broadcast channel block (SL-SSB), and the like. The conventional slot structure of the SL (that is, the slot does not include the SL-SSB) includes the PSCCH and the PSSCH and might include PSFCH.

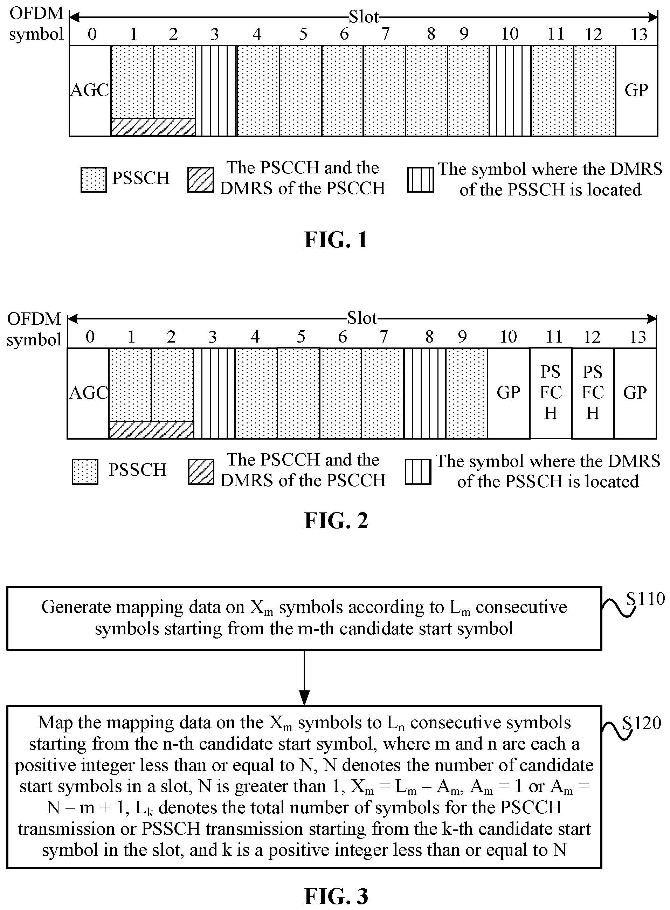

FIG. 1 is a schematic diagram of a conventional slot structure of an SL without a physical sidelink feedback channel (PSFCH) according to an embodiment. FIG. 2 is a schematic diagram of a conventional slot structure of an SL with a PSFCH according to an embodiment. For the SL resource pool, the symbols available for the SL in the slot may be determined by configuring or preconfiguring the start symbol index (that is, the OFDM symbol position) and the number of consecutive symbols in the slot. FIGS. 1 and 2 are drawn with the case where the first OFDM symbol (that is, symbol 0) in the slot is used as the start symbol and the number of consecutive symbols is 14 as an example. The slot in FIG. 1 does not include the PSFCH. The first OFDM symbol in the slot is used for automatic gain control (AGC) and replicates the information transmitted on the second symbol. The PSCCH occupies two or three symbols starting from the second symbol of the slot (FIG. 1 is drawn with the case where the PSCCH occupies two symbols as an example). The PSCCH is located in the first subchannel of the PSSCH in the frequency domain. The last symbol transmitted by the PSCCH/PSSCH (that is, the last symbol in the slot) is the guard period (GP). The GP is used for the state transition between the transmission and reception of the UE. The slot in FIG. 2 includes the PSFCH. The first OFDM symbol in the slot is used for AGC and replicates the information transmitted on the second symbol. The PSCCH occupies two or three symbols starting from the second symbol of the slot (FIG. 2 is drawn with the case where the PSCCH occupies two symbols as an example). The PSCCH is located in the first subchannel of the PSSCH in the frequency domain. The last symbol for the SL transmission is the GP. The PSFCH occupies the second to last and the third to last symbols (that is, symbols 11 and 12) for the SL transmission. The third to last symbol replicates the information transmitted on the second to last symbol (that is, the third to last symbol also transmits the PSFCH). It is also to be understood that the third to last symbol is used for receiving the AGC of the PSFCH, and the fourth to last symbol is the GP. Compared with the slot shown in FIG. 1, the number of symbols for the PSCCH/PSSCH in the slot shown in FIG. 2 is 3 less. The symbols for the SL transmission are determined through the configured or preconfigured start symbol index (that is, the OFDM symbol position) and the number of consecutive symbols.

The time domain position of the demodulation reference signal (DMRS) of the PSSCH in a slot is determined through the number of symbols *l_{d}* occupied by the PSSCH, the number of DMRSs of the PSSCH, and the number of symbols occupied by the PSCCH. Table 1 is an example table of the time domain positions of the DMRSs of the PSSCH. As shown in Table 1, *l_{d}* denotes the number of symbols for the transmission of the PSSCH and the associated PSCCH, where the symbols include AGC symbols but do not include GP symbols following the PSCCH/PSSCH. In conjunction with Table 1, it can be seen that in FIG. 1, *l_{d} =* 13, the number of DMRSs of the PSSCH is 2, and the time domain positions of the DMRSs of the PSSCH are the positions of symbols 3 and 10. In FIG. 2, *l_{d}=* 10, the number of DMRSs of the PSSCH is 2, and the time domain positions of the DMRSs of the PSSCH are the positions of symbols 3 and 8. The time domain position of the DMRS of the PSSCH is the symbol index relative to the first symbol for the transmission of the PSSCH and the associated PSCCH, relative symbol index 0 represents the first symbol for the transmission of the PSSCH and the associated PSCCH, relative symbol index 1 represents the second symbol for the transmission of the PSSCH and the associated PSCCH, and so on. The time domain positions of the DMRSs of the PSSCH are the positions of symbols 3 and 8, that is, the 4th and 9th symbols for the transmission of the PSSCH and the associated PSCCH. The resources in the symbols where the DMRSs of the PSSCH are located but not used by the DMRSs can transmit the PSSCH.

**Table 1**

| *l_{d}* | DMRS position **l̅** | | | | | |
|---|---|---|---|---|---|---|
| | The PSCCH occupies two symbols | | | The PSCCH occupies three symbols | | |
| | The number of DMRSs of the PSSCH | | | The number of DMRSs of the PSSCH | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

According to the preceding conventional slot structure of the SL, the PSCCH or the PSSCH is transmitted based on the slot, that is, the PSCCH or the PSSCH can only be transmitted once in a slot and can only be transmitted from the configured or preconfigured start symbol. To increase the chance of the UE successfully accessing the channel in the slot, in the unlicensed frequency band, one slot may include multiple candidate start symbols. If the UE succeeds to LBT before the first candidate start symbol, the PSCCH or PSSCH is transmitted from the first candidate start symbol. If the UE fails to LBT before the first candidate start symbol, LBT continues before the second candidate start symbol. If LBT succeeds before the second candidate start symbol, the PSCCH or PSSCH is transmitted from the second candidate start symbol. If LBT fails before the second candidate start symbol, LBT continues before the next candidate start symbol, and so on. In this manner, the chance of transmitting the PSCCH or PSSCH, that is, the chance of successfully accessing the channel can be increased.

Before sending the PSSCH, the UE needs to determine the TBS, that is, the amount of data carried on the time-frequency resources, and generate data mapped to the SL transmission resources. However, for the PSSCH transmission, when one slot includes multiple candidate start symbols, the numbers of symbols for the PSSCH transmission corresponding to different candidate start symbols are different: the later the start symbol, the fewer the symbols. Therefore, according to the frequency domain resources allocated to the PSSCH transmission in the slot and the numbers of symbols for the PSSCH transmission corresponding to different candidate start symbols, it can be known that since the sizes of physical resources for the PSSCH transmission corresponding to different candidate start symbols are different, the data mapped to the physical resources and generated by the PSSCH transmission corresponding to different candidate start symbols is also different. When preparing PSSCH transmission data, the UE does not know before which candidate start symbol in the slot LBT succeeds, resulting in the inability to prepare in advance the data mapped to the physical resources corresponding to the PSSCH transmission. Therefore, when one slot is supported to include multiple candidate start symbols, how the UE performs data mapping is a problem that needs to be solved urgently.

The data mapping method provided in the present application may be applied to SL communication systems based on various wireless communication technologies, for example, SL communication systems based on long-term evolution (LTE) technology, 4th-generation (4G) mobile communication technology, 5th-generation (5G) mobile communication technology, LTE and 5G hybrid technology, 5G new radio (NR) technology, and new communication technologies emerging in the future communication development, such as 6th-generation (6G) mobile communication technology.

In the embodiment of the present application, a data mapping method, a communication node, and a storage medium are provided, thereby preparing in advance the data transmitted in the slot in the case where the slot includes multiple candidate start symbols and the UE has not determined from which candidate start symbol in the slot to start to transmit the PSSCH and the associated PSCCH.

The data mapping method, the communication node, and the technical effects are described below.

FIG. 3 is a flowchart of a data mapping method according to an embodiment. As shown in FIG. 3, the method provided in this embodiment is applicable to a communication node (for example, the UE). The method includes the following:

In S110, mapping data on Xₘ symbols is generated according to Lₘ consecutive symbols starting from the m-th candidate start symbol.

In an embodiment, that the mapping data on the Xₘ symbols is generated according to the Lₘ consecutive symbols starting from the m-th candidate start symbol includes at least one of the manners below.

The size of the transport block (TB) carried by the PSSCH is determined according to the number of symbols occupied by the PSSCH starting from the m-th candidate start symbol, the frequency domain resources allocated to the PSSCH, and the resource overhead occupied by other signals or channels. Channel coding and rate matching are performed on the TB to obtain the encoded data information bits. Channel coding and rate matching are performed on the second-stage SL control information to obtain the encoded control information bits. The data information bits and the control information bits are multiplexed (or concatenated) together to obtain the PSSCH information bits. After scrambling, modulating, layer mapping, and precoding the PSSCH information bits, modulation symbols on the resources occupied by the PSSCH on the Xₘ symbols are generated, and other signals or channels include at least one of the following: the PSFCH, the DMRS of the PSSCH, the PSCCH, the DMRS of the PSCCH, the second-stage SL control information carried by the PSSCH, the Channel State Information Reference Signal (CSI-RS), the positioning reference signal (PRS), or the phase tracking reference signal (PTRS).

The DMRS sequence on the resources occupied by the DMRSs of the PSSCH on the Xₘ symbols is generated according to the resource positions of the DMRSs of the PSSCH on the Xₘ symbols.

Processing such as channel coding, rate matching, scrambling, and modulation is performed on the first-stage SL control information to generate the modulation symbols on the resources occupied by the PSCCH on the Xₘ symbols.

The DMRS sequence on the resources occupied by the DMRSs of the PSCCH on the Xₘ symbols is generated according to the resource positions of the DMRSs of the PSCCH on the Xₘ symbols.

According to the resource positions of the reference signals on the Xₘ symbols, a reference signal sequence on the resources occupied by the reference signals on the Xₘ symbols is generated, and the reference signal includes at least one of the following: the CSI-RS, the PRS, or the PTRS.

In S120, the mapping data on the Xₘ symbols is mapped to Lₙ consecutive symbols starting from the n-th candidate start symbol. m and n are each a positive integer less than or equal to N, N denotes the number of candidate start symbols in a slot, N is greater than 1, Xₘ = Lₘ - Aₘ, Aₘ = 1 or Aₘ = N - m + 1, Lₖ denotes the total number of symbols for the PSCCH transmission or PSSCH transmission starting from the k-th candidate start symbol in the slot, and k is a positive integer less than or equal to N.

In an embodiment, the value relationship between m and n may be any one of: n less than m, n equal to m, and n greater than m. Since Xₘ = Lₘ - Aₘ, and Aₘ = 1 or Aₘ = N - m + 1, then Xₘ = Lₘ - 1 or Xₘ = Lₘ - (N - m + 1). Based on this, it can be known that six cases of the values of m, n, and Xₘ exist.

In case 1, n is less than m, and Xₘ = Lₘ - 1.

In case 2, n is less than m, and Xₘ = Lₘ - (N - m + 1).

In case 3, n is equal to m, and Xₘ = Lₘ - 1.

In case 4, n is equal to m, and Xₘ = Lₘ - (N - m + 1).

In case 5, n is greater than m, and Xₘ = Lₘ - 1.

In case 6, n is greater than m, and Xₘ = Lₘ - (N - m + 1).

In an embodiment, when n is less than m and Xₘ = Lₘ - 1 (that is, case 1), the method of mapping the mapping data on the Xₘ symbols to the Lₙ consecutive symbols starting from the n-th candidate start symbol may be any one of the methods below.

In method a1, the mapping data on the Xₘ symbols is mapped in sequence to the second to the Lₘ-th symbols among the Lₙ consecutive symbols starting from the n-th candidate start symbol; the mapping data on the specific Lₙ-Lₘ symbols among the Xₘ symbols is mapped in sequence to the last Lₙ-Lₘ symbols among the Lₙ consecutive symbols starting from the n-th candidate start symbol; and the first symbol among the Lₙ consecutive symbols starting from the n-th candidate start symbol replicates the data on the second symbol.

In method a2, the mapping data on the specific Lₙ-Lₘ symbols among the Xₘ symbols is mapped in sequence to the first Lₙ-Lₘ symbols among the Lₙ consecutive symbols starting from the n-th candidate start symbol; the mapping data on the Xₘ symbols is mapped in sequence to the last Lₘ-1 symbols among the Lₙ consecutive symbols starting from the n-th candidate start symbol; and the (Lₙ-Lₘ+1)-th symbol among the Lₙ consecutive symbols starting from the n-th candidate start symbol replicates the data on the (Lₙ-Lₘ+2)-th symbol.

In method a3, the mapping data on the specific Lₙ-Lₘ symbols among the Xₘ symbols is mapped in sequence to the second to the (Lₙ-Lₘ+1)-th symbols among the Lₙ consecutive symbols starting from the n-th candidate start symbol; the mapping data on the Xₘ symbols is mapped in sequence to the last Lₘ-1 symbols among the Lₙ consecutive symbols starting from the n-th candidate start symbol; and the first symbol among the Lₙ consecutive symbols starting from the n-th candidate start symbol replicates the data on the second symbol.

The specific Lₙ-Lₘ symbols among the Xₘ symbols include one of the following:
The last Lₙ-Lₘ symbols among the Xₘ symbols;
The first Lₙ-Lₘ symbols among the Xₘ symbols;
Configured or predefined Lₙ-Lₘ symbols among the Xₘ symbols.

For example, the predefined Lₙ-Lₘ symbols among the Xₘ symbols are the Lₙ-Lₘ symbols starting from the first symbol including the DMRS of the PSSCH among the Xₘ symbols; or the predefined Lₙ-Lₘ symbols among the Xₘ symbols are the Lₙ-Lₘ symbols starting from the first symbol including the PSCCH among the Xₘ symbols.

In an embodiment, when n is less than m and Xₘ = Lₘ - (N - m +1) (that is, case 2), the method of mapping the mapping data on the Xₘ symbols to the Lₙ consecutive symbols starting from the n-th candidate start symbol may be any one of the methods below.

In method b1, the n-th candidate start symbol and the subsequent N-n candidate start symbols are removed from the Lₙ consecutive symbols starting from the n-th candidate start symbol to obtain a first symbol set, and the first symbol set includes Xₙ symbols; the mapping data on the Xₘ symbols is mapped in sequence to the last Xₘ symbols in the first symbol set; the mapping data on the specific Xₙ-Xₘ symbols among the Xₘ symbols is mapped in sequence to the first Xₙ-Xₘ symbols in the first symbol set; and each of the n-th candidate start symbol and the subsequent N-n candidate start symbols among the Lₙ consecutive symbols starting from the n-th candidate start symbol replicates the data on the respective next symbol.

In method b2, the n-th candidate start symbol and the subsequent N-n candidate start symbols are removed from the Lₙ consecutive symbols starting from the n-th candidate start symbol to obtain a first symbol set, and the first symbol set includes Xₙ symbols; the mapping data on the Xₘ symbols is mapped in sequence to the first Xₘ symbols in the first symbol set; the mapping data on the specific Xₙ-Xₘ symbols among the Xₘ symbols is mapped in sequence to the last Xₙ-Xₘ symbols in the first symbol set; and each of the n-th candidate start symbol and the subsequent N-n candidate start symbols among the Lₙ consecutive symbols starting from the n-th candidate start symbol replicates the data on the respective next symbol.

The specific Xₙ-Xₘ symbols among the Xₘ symbols include one of the following:
The last Xₙ-Xₘ symbols among the Xₘ symbols;
The first Xₙ-Xₘ symbols among the Xₘ symbols;
Configured or predefined Xₙ-Xₘ symbols among the Xₘ symbols.

For example, the predefined Xₙ-Xₘ symbols among the Xₘ symbols are the Xₙ-Xₘ non-candidate start symbols starting from the first symbol including the DMRS of the PSSCH among the Xₘ symbols; or the predefined Xₙ-Xₘ symbols among the Xₘ symbols are the Xₙ-Xₘ non-candidate start symbols starting from the first symbol including the PSCCH among the Xₘ symbols.

In an embodiment, when n is equal to m and Xₘ = Lₘ - 3 (that is, case 3), the method of mapping the mapping data on the Xₘ symbols to the Lₙ consecutive symbols starting from the n-th candidate start symbol may be method c.

In method c, the mapping data on the Xₘ symbols is mapped in sequence to the second to the Lₘ-th symbols among the Lₘ consecutive symbols starting from the m-th candidate start symbol; and the first symbol among the Lₘ consecutive symbols starting from the m-th candidate start symbol replicates the data on the second symbol.

In an embodiment, when n is equal to m and Xₘ = Lₘ - (N - m + 1) (that is, case 4), the method of mapping the mapping data on the Xₘ symbols to the Lₙ consecutive symbols starting from the n-th candidate start symbol may be method d.

In method d, the m-th candidate start symbol and the subsequent N-m candidate start symbols are removed from the Lₘ consecutive symbols starting from the m-th candidate start symbol to obtain a second symbol set, where the second symbol set includes Xₘ symbols; the mapping data on the Xₘ symbols is mapped in sequence to the Xₘ symbols in the second symbol set; and each of the m-th candidate start symbol and the subsequent N-m candidate start symbols among the Lₘ consecutive symbols starting from the m-th candidate start symbol replicates the data on the respective next symbol.

In an embodiment, when n is greater than m and Xₘ = Lₘ - 1 (that is, case 5), the method of mapping the mapping data on the Xₘ symbols to the Lₙ consecutive symbols starting from the n-th candidate start symbol may be method e.

In method e, the mapping data on the specific Xₙ symbols among the Xₘ symbols is mapped in sequence to the second to the Lₙ-th symbols among the Lₙ consecutive symbols starting from the n-th candidate start symbol; and the first symbol among the Lₙ consecutive symbols starting from the n-th candidate start symbol replicates the data on the second symbol.

In an embodiment, when n is greater than m and Xₘ = Xₘ = Lₘ - (N - m + 1) (that is, case 6), the method of mapping the mapping data on the Xₘ symbols to the Lₙ consecutive symbols starting from the n-th candidate start symbol may be method f.

In method f, the n-th candidate start symbol and the subsequent N-n candidate start symbols are removed from the Lₙ consecutive symbols starting from the n-th candidate start symbol to obtain a first symbol set, where the first symbol set includes Xₙ symbols; the mapping data on the specific Xₙ symbols among the Xₘ symbols is mapped in sequence to the Xₙ symbols in the first symbol set; and each of the n-th candidate start symbol and the subsequent N-n candidate start symbols among the Lₙ consecutive symbols starting from the n-th candidate start symbol replicates the data on the respective next symbol.

The specific Xₙ symbols among the Xₘ symbols include one of the following:
The first Xₙ symbols among the Xₘ symbols;
The last Xₙ symbols among the Xₘ symbols;
Configured or predefined Xₙ symbols among the Xₘ symbols.

For example, the predefined Xₙ symbols among the Xₘ symbols are Xₙ consecutive non-candidate start symbols starting from the first symbol including the PSSCH among the Xₘ symbols.

Regardless of which of the preceding six cases the values of m, n, and Xₘ belong to, in both S110 and S120, the mapping data can be generated and mapped. For ease of understanding, different cases are described in detail in the embodiments below.

In an embodiment, m is equal to 1; m is equal to N; m is a configured or preconfigured value; or the value of m is indicated by the SL control information. For example, the SL control information here may be the first-stage SL control information carried by the PSCCH in the mapping data.

In an embodiment, the symbol positions of the PSCCH in the slot are determined in any of the manners below.

The symbol positions of the PSCCH in the slot are Y symbols starting from the next symbol of the N-th candidate start symbol in the slot.

The symbol positions of the PSCCH in the slot are configured or preconfigured.

That is, when the PSSCH and the associated PSCCH are transmitted starting from different candidate start symbols in the slot, the symbol positions of the PSCCH in the slot are the same.

In an embodiment, for the slot in the SL resource pool, the UE is configured or preconfigured with a start symbol S for the SL and the number L of consecutive symbols for the SL, then the total number of symbols for the SL starting from the k-th candidate start symbol is S+L-Sₖ, where Sₖ denotes the symbol index corresponding to the k-th candidate start symbol.

The total number of symbols Lₖ for the PSCCH transmission or PSSCH transmission starting from the k-th candidate start symbol satisfies that Lₖ = S + L - Sₖ - B, that is, the indexes of the Lₖ symbols for the PSCCH or PSSCH transmission starting from the k-th candidate start symbol are Sₖ, Sₖ₊₁, ..., and S+L-B-1, respectively, that is to say, the indexes of the first to the (S+L-Sₖ-B)-th symbols among the Lₖ symbols for the PSCCH or PSSCH transmission starting from the k-th candidate start symbol are Sₖ, Sₖ₊₁, ..., and S+L-B-1, respectively.

k = 1, 2, ..., or N, and B is one of the following: 0, 1, 3, or 4.

For example, B may be understood as the number of symbols for the PSCCH or PSSCH transmission among the symbols for the SL starting from the k-th candidate start symbol. For the slot that does not include the PSFCH, B is 0 or 1; and for the slot that includes the PSFCH, B is 3 or 4. For example, for the slot that does not include the PSFCH, the last symbol among the symbols for the SL cannot transmit the PSCCH or PSSCH (that is, the last symbol is used as the GP symbol), or the last symbol among the symbols for the SL can also transmit the PSCCH or PSSCH. For the slot that includes the PSFCH, the last four symbols among the symbols for the SL cannot transmit the PSCCH or PSSCH, or the last three symbols among the symbols for the SL cannot transmit the PSCCH or PSSCH.

In an embodiment, in the preceding method of mapping the mapping data on the Xₘ symbols to the Lₙ consecutive symbols starting from the n-th candidate start symbol (for example, method a1, method a2, method a3, method b1, method b2, method c, method d, method e, and method f), "the *-th symbol", "the last *-th symbol", and "the first *-th symbol" may be described from the perspective of the symbol indexes.

For example, the first symbol among the Lₙ consecutive symbols starting from the n-th candidate start symbol may also be described as symbol Sₙ, the second symbol may also be described as symbol Sₙ+1, ..., and so on.

For example, the first Lₙ-Lₘ symbols among the Lₙ consecutive symbols starting from the n-th candidate start symbol may also be described as symbols Sₙ, Sₙ+1, ..., and Lₙ-Lₘ+Sₙ-1. Apparently, the symbol Lₙ-Lₘ+Sₙ-1=(S+L-Sₙ-B)-(S+L-Sₘ-B)+Sₙ-1=Sₘ-1 is the previous symbol of the m-th candidate start symbol, Lₙ-Lₘ=(S+L-Sₙ-B)-(S+L-Sₘ-B)=Sₘ-Sₙ is the difference between the m-th and n-th candidate start symbols, and the (Lₙ-Lₘ+1)-th symbol among the Lₙ consecutive symbols starting from the n-th candidate start symbol is the m-th candidate start symbol, that is, symbol Sₘ.

For example, the last Lₙ-Lₘ symbols among the Lₙ consecutive symbols starting from the n-th candidate start symbol may also be described as symbols Sₙ+Lₘ, Sₙ+Lₘ+1, ..., and Sₙ+Lₙ-1.

Similarly, the last Lₘ-1 symbols among the Lₙ consecutive symbols starting with the n-th candidate start symbol, the first Xₙ-Xₘ symbols in the first symbol set, the last Xₘ symbols in the first symbol set, the last Xₙ-Xₘ symbols in the first symbol set, the first Xₘ symbols in the first symbol set, the Xₙ symbols in the first symbol set, and the Xₘ symbols in the second symbol set may be described from the perspective of the symbol indexes, and examples are not given here one by one.

In addition, unless otherwise specified, the following embodiments or implementation manners of the present application mention configuring or preconfiguring a certain piece of information or that a certain piece of information is configured or preconfigured, which means that the information is configured for the UE by the network or the base station; or the information is provided for the UE by other higher-layer entities (such as the higher layer of the UE or other network entities). The "symbol" in the present application refers to the OFDM symbol unless otherwise specified and when specified, includes, but is not limited to, a modulation symbol, a complex-valued symbol, or the like. The AGC symbol may be understood as a symbol whose data is replicated from the next symbol. Unless otherwise specified, the "PSSCH and associated PSCCH" in the present application further include the DRMS of the PSSCH and the DMRS of the PSCCH, and the "PSCCH or PSSCH" further includes the DMRS of the PSSCH or the DMRS of the PSCCH. In the present application, symbol a replicates the data on symbol b, which may also be understood as that the data on symbol b is repeated on symbol a, where symbol a and symbol b are merely used for distinguishing between different symbols and do not represent symbol indexes. In the present application, "the symbols for the PSCCH transmission or PSSCH transmission" and "the symbols for the PSCCH or PSSCH transmission" have the same meaning.

In a first possible implementation manner, n is less than or equal to m, and the slot does not include the PSFCH.

For the slot in the SL resource pool, the UE may be provided (for example, configured or preconfigured) with a start symbol for the SL and the number of consecutive symbols for the SL. The start symbol for the SL may be used as the first candidate start symbol. The UE may further be provided with at least one additional candidate start symbol. For example, one slot includes N candidate start symbols, N > 1, and the N candidate start symbols are usually numbered in chronological order, that is, the N candidate start symbols are usually the 1st to the N-th candidate start symbols in chronological order.

In an embodiment, only the slot that does not include the PSFCH can support N candidate start symbols; or N candidate start symbols can be supported regardless of whether the slot includes the PSFCH; or different candidate start symbols are supported for the slot that does not include the PSFCH and the slot that includes the PSFCH, that is, N has different values.

For the slot that does not include the PSFCH, the total number of symbols for the PSCCH or PSSCH transmission is the total number of symbols for the SL minus 1, that is, the last symbol among the symbols for the SL is used as the GP symbol. For example, for each slot, the configured or preconfigured start symbol for the SL and the configured or preconfigured number of consecutive symbols for the SL are S and L, respectively, and the symbol index corresponding to the k-th candidate start symbol is Sₖ (Sₖ is greater than or equal to S; and generally, S₁ = S). Then, the total number of symbols for the SL starting from the k-th candidate start symbol is S+L-Sₖ. Therefore, the number Lₖ of symbols for the PSCCH or PSSCH transmission starting from the k-th candidate start symbol satisfies that Lₖ = S + L - Sₖ - 1. That is, the indexes of the Lₖ symbols for the PSCCH or PSSCH transmission starting from the k-th candidate start symbol are Sₖ, Sₖ₊₁, ..., and S+L-2, where k = 1, 2, ..., or N, that is, symbol S+L-1 is not used for transmitting the PSCCH or PSSCH; or the total number of symbols for the PSCCH or PSSCH transmission is the total number of symbols for the SL. For example, for each slot, the configured or preconfigured start symbol for the SL and the configured or preconfigured number of consecutive symbols for the SL are S and L, respectively, and the symbol index corresponding to the k-th candidate start symbol is Sₖ (Sₖ is greater than or equal to S; and generally, S₁ = S). Then, the total number of symbols for the SL starting from the k-th candidate start symbol is S+L-Sₖ. Therefore, the number Lₖ of symbols for the PSCCH or PSSCH transmission starting from the k-th candidate start symbol satisfies that Lₖ = S + L - Sₖ. That is, the indexes of the Lₖ symbols for the PSCCH or PSSCH transmission starting from the k-th candidate start symbol are Sₖ, Sₖ+1, ..., and S+L-1, where k = 1, 2, ..., or N, that is, symbol S+L-1 is also used for transmitting the PSCCH or PSSCH. That is, all the symbols for the SL can transmit the PSCCH or PSSCH. This case is suitable for the case where the PSCCH or PSSCH transmission occupies multiple slots continuously, which can improve the resource utilization rate. The symbols for the SL include both AGC symbols and GP symbols.

In this implementation manner, the start symbol S for the SL and the number L of consecutive symbols for the SL in the slot are 0 and 14, respectively, that is, all 14 symbols can be used for the SL, and the total number of symbols for the PSCCH or PSSCH transmission is 13, that is, the last symbol in the slot is used as the GP symbol. Here, the total number of symbols for the PSCCH or PSSCH transmission being 13 refers to the total number of symbols potentially for the PSCCH or PSSCH transmission. The symbols used in actual transmission may be determined according to the candidate start symbol. For example, if the k-th candidate start symbol is symbol Sₖ, then the number Lₖ of symbols for the PSCCH or PSSCH transmission starting from the k-th candidate start symbol is 13-Sₖ, and the symbol indexes are Sₖ, Sₖ+1, ..., and 12, where k = 1, 2, ..., or N.

Specifically, the communication node first generates the mapping data on the Xₘ symbols according to the Lₘ consecutive symbols starting from the m-th candidate start symbol and then maps the mapping data on the Xₘ symbols to the Lₙ consecutive symbols starting from the n-th candidate start symbol. m and n are each a positive integer less than or equal to N, N denotes the number of candidate start symbols in a slot, N is greater than 1, Xₘ = Lₘ - Aₘ, Aₘ = 1 or Aₘ = N - m + 1, Lₖ denotes the total number of symbols for the PSCCH transmission or PSSCH transmission starting from the k-th candidate start symbol in the slot, and k is a positive integer less than or equal to N.

In an embodiment, m is equal to 1; m is equal to N; m is a configured or preconfigured value; or the value of m is indicated by the SL control information. For example, the value of m is carried in the first-stage SL control information in the PSCCH.

In an embodiment, for a resource pool, a bandwidth part (BWP), or a carrier, each candidate start symbol may be configured or preconfigured (or predefined) as an AGC symbol, or the start symbol for the PSCCH or PSSCH transmission may be configured or preconfigured (or predefined) as an AGC symbol. If each candidate start symbol is configured or preconfigured (or predefined) as the AGC symbol, then the number Aₖ of AGC symbols among the symbols for the PSCCH or PSSCH transmission starting from the k-th candidate start symbol in the slot is N-k+1, that is, the k-th candidate start symbol and all the subsequent candidate start symbols among the symbols for the PSCCH or PSSCH transmission starting from the k-th candidate start symbol are AGC symbols; otherwise only the k-th candidate start symbol among the symbols for the PSCCH or PSSCH transmission starting from the k-th candidate start symbol is the AGC symbol (or the m-th or N-th candidate start symbol among the symbols for the PSCCH or PSSCH transmission starting from the k-th candidate start symbol is the AGC symbol, where m > k), and the number Aₖ of AGC symbols among the symbols for the PSCCH or PSSCH transmission starting from the k-th candidate start symbol in the slot is 1, where k = 1, 2, ..., or N.

In an embodiment, the Xₘ symbols do not include the AGC symbol or the GP symbol. The Lₖ symbols include the AGC symbol but do not include the GP symbol. Aₖ may be understood as the number of AGC symbols among the symbols for the PSCCH or PSSCH transmission starting from the k-th candidate start symbol, and k is a positive integer less than or equal to N. For each candidate start symbol, the data on the candidate start symbol is the replication of the data on the next symbol.

For example, the slot includes two candidate start symbols (that is, N = 2), the start symbol S for the SL and the number L of consecutive symbols for the SL are 0 and 14, respectively, the first and second candidate start symbols are symbols 0 and 4, respectively, n = 1, m = 2, and the number of symbols for the PSCCH or PSSCH transmission corresponding to the first and second candidate start symbols are 13 (that is, L₁ = 13) and 9 (that is, L₂ = 9), respectively.

In this implementation manner, Aₘ = 1 (or Aₘ = N - m + 1 = 1), the UE generates the mapping data on eight (that is, Xₘ = X₂ = L₂ - 1 = 8) symbols according to nine (that is, Lₘ = L₂ = 9) consecutive symbols starting from the second (that is, m = 2) candidate start symbol. It may also be understood as that the UE generates the mapping data on eight symbols (that is, symbol 5 to symbol 12) according to the assumption that the PSCCH or PSSCH is transmitted on nine consecutive symbols starting from symbol 4 (that is, the second candidate start symbol). Generally, the first symbol may be regarded as an AGC symbol and no mapping data needs to be generated.

Specifically, the UE may determine the size of the TB carried by the PSSCH according to the number (which is 9) of symbols occupied by the PSSCH starting from the second (that is, m = 2) candidate start symbol, the frequency domain resources allocated to the PSSCH (indicated by the PSCCH that schedules the PSSCH resources, that is, the associated PSCCH of the PSSCH), and the resource overhead of other signals or channels. Channel coding and rate matching are performed on the TB to obtain the encoded data information bits. Channel coding and rate matching are performed on the second-stage SL control information to obtain the encoded control information bits. The data information bits and the control information bits are multiplexed (or concatenated) together to obtain the PSSCH information bits. After scrambling, modulating, layer mapping, and precoding the PSSCH information bits, modulation symbols on the resources occupied by the PSSCH on eight symbols are generated, and other signals or channels include at least one of the following: the PSFCH, the DMRS of the PSSCH, the PSCCH, the DMRS of the PSCCH, the second-stage SL control information carried by the PSSCH, the CSI-RS, the PRS, or PTRS.

According to the number (which is 2) of DMRSs of the PSSCH indicated by the PSCCH (the number of DMRSs of the PSSCH may be 2 or 3, and the case where the number of DMRSs of the PSSCH is 2 is used as an example here) and the number (which is 9) of symbols occupied by the PSSCH (that is, nine consecutive symbols starting from the second candidate start symbol (symbol 4), and *l_{d}* = 9), based on Table 1, it can be seen that the DRMSs of the PSSCH are located at symbols 3 and 8 (that is, the relative symbol indexes relative to the first symbol among nine symbols, where the symbol index starts from 0, that is, the first symbol index among the nine symbols is 0) among the nine symbols, symbols 3 and 8 among the nine symbols are symbols 7 and 12 in the slot, respectively, and the DMRS sequence of the PSSCH on the resources occupied by the DMRSs of the PSSCH on eight symbols is generated according to the resource positions of the DMRSs of the PSSCH.

Channel coding, rate matching, scrambling, and modulation are performed on the first-stage SL control information to generate the modulation symbols on the resources occupied by the PSCCH on the eight symbols, where the PSCCH starts from the next symbol of the candidate start symbol, and the number of occupied symbols and the frequency domain resources may be configured or preconfigured. In this example, the symbols occupied by the PSCCH are symbols 5 and 6.

The DMRS sequence of the PSCCH on the resources occupied by the DMRSs of the PSCCH on the eight symbols is generated according to the resource positions of the DMRSs of the PSCCH on the nine symbols, where the DMRS of the PSCCH is located on a specific resource element (RE) in each resource block (RB) among all the symbols of the PSCCH, for example, RE #1, #5, or #9.

In an embodiment, according to the resource positions of the reference signals on the nine symbols, a reference signal sequence on the resources occupied by the reference signals on the eight symbols is generated, and the reference signal includes at least one of the following: the CSI-RS, the PRS, or the PTRS. For the sake of brevity, the resource positions of the reference signals are not illustrated in the drawings in the present application.

In an embodiment, the UE maps the mapping data on the eight (that is, Xₘ = X₂ = L₂ - 1 = 8) symbols (that is, symbols 5 to 12) generated according to the 9 (that is, Lₘ = L₂ = 9) consecutive symbols starting from the second (that is, m = 2) candidate start symbol (that is, symbol 4) to 13 (that is, Lₙ = L₁ = 13) consecutive symbols starting from the first (that is, n = 1) candidate start symbol (that is, symbol 0).

In an embodiment, the UE maps the mapping data on the eight (that is, Xₘ = X₂ = L₂ - 2 = 8) symbols (that is, symbols 5 to 12) generated according to the 9 (that is, Lₘ = L₂ = 9) consecutive symbols starting from the second (that is, m = 2) candidate start symbol (that is, symbol 4) to 9 (that is, Lₘ = L₂ = 9) consecutive symbols starting from the second (that is, n = 2) candidate start symbol (that is, symbol 4).

The following provides some examples for explaining and illustrating "mapping the mapping data on the Xₘ symbols to the Lₙ consecutive symbols starting from the n-th candidate start symbol".

### Example one

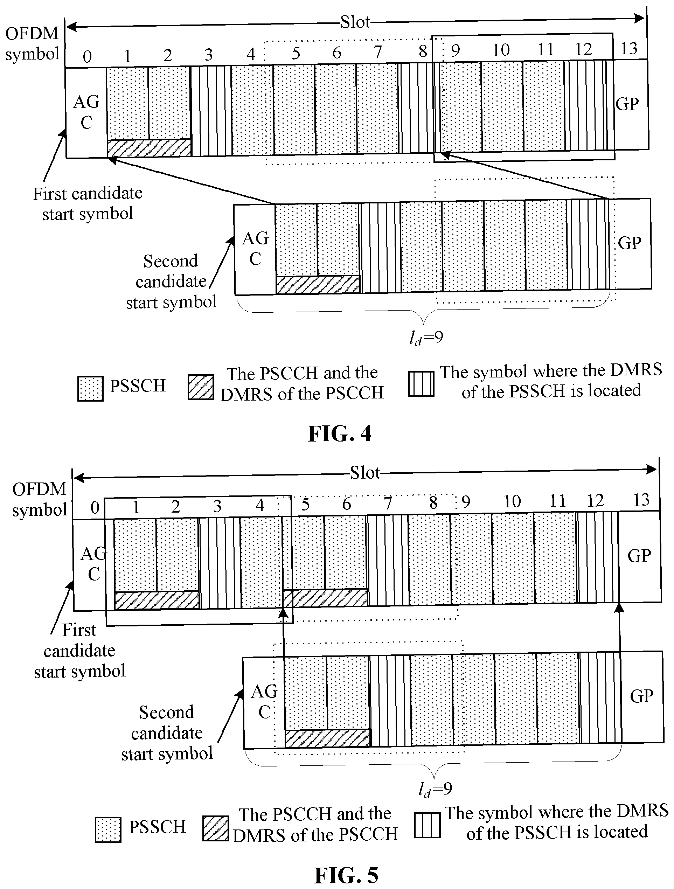

FIG. 4 is a schematic diagram of a first type of data mapping according to an embodiment. As shown in FIG. 4, the UE maps the mapping data generated on the eight symbols to 13 consecutive symbols starting from symbol 0 in the following manner: the mapping data on the eight symbols is mapped in sequence to symbols 1 to 8; and the mapping data on the last four symbols (that is, symbols 9 to 12 or 12 to 9 in the dotted box at the bottom of FIG. 4) among the eight symbols is mapped in sequence to symbols 9 to 12 (that is, the symbols in the solid box in FIG. 4). It may also be regarded as that after the data is mapped to symbols 5 to 8, the data on symbols 5 to 8 (or 8 to 5) (that is, the symbols in the dotted box at the top of FIG. 4) is mapped (or replicated) in sequence to symbols 9 to 12, and the data on symbol 0 is replicated from symbol 1.

### Example two

FIG. 5 is a schematic diagram of a second type of data mapping according to an embodiment. As shown in FIG. 5, the UE maps the mapping data generated on the eight symbols to 13 consecutive symbols starting from symbol 0 in the following manner: the mapping data on the eight symbols is mapped in sequence to symbols 5 to 12; and the mapping data on the first four symbols (that is, symbols 5 to 8 or 8 to 5 in the dotted box at the bottom of FIG. 5) among the eight symbols is mapped in sequence to symbols 1 to 4 (that is, the symbols in the solid box in FIG. 5). It may also be regarded as that after the data is mapped to symbols 5 to 8, the data on symbols 5 to 8 (or 8 to 5) (that is, the symbols in the dotted box at the top of FIG. 5) is mapped (or replicated) in sequence to symbols 1 to 4, and symbol 0 replicates the data on symbol 1.

### Example three

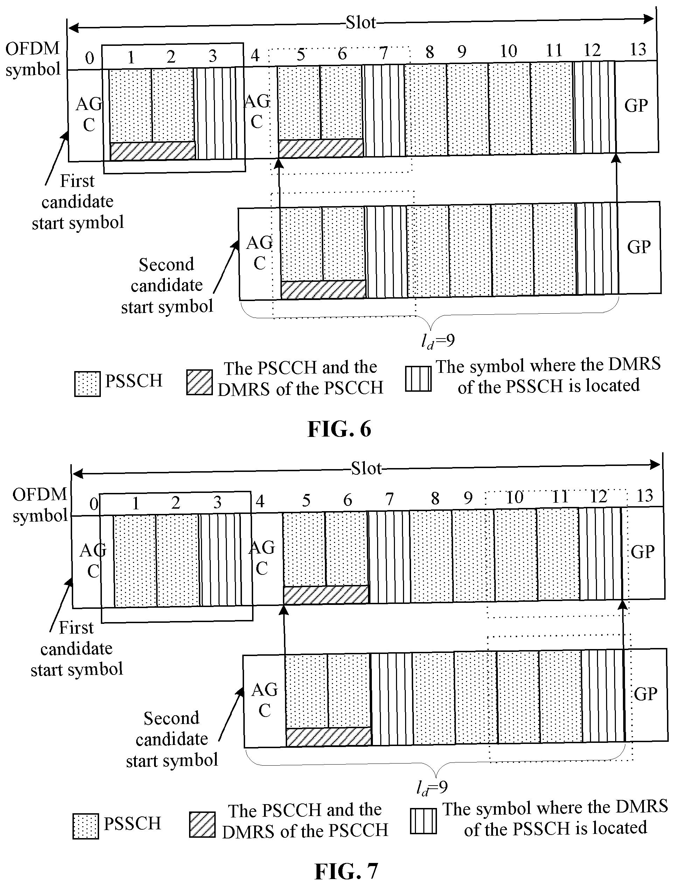

FIG. 6 is a schematic diagram of a third type of data mapping according to an embodiment. As shown in FIG. 6, the UE maps the mapping data generated on the eight symbols to 13 consecutive symbols starting from symbol 0 in the following manner: the mapping data on the eight symbols is mapped in sequence to symbols 5 to 12; and the mapping data on the first three symbols among the eight symbols is mapped in sequence to symbols 1 to 3. It may also be regarded as that after the data is mapped to symbols 5 to 7, the data on symbols 5 to 7 (or 7 to 5) is mapped (or replicated) in sequence to symbols 1 to 3, the data on symbol 0 is replicated from symbol 1, and the data on symbol 4 is replicated from symbol 5.

The mapping manner of this example may also be understood as below. The first and second candidate start symbols (symbols 0 and 4) are removed from the 13 consecutive symbols starting from the first candidate start symbol to obtain a first symbol set, that is, {symbols 1 to 3 and symbols 5 to 12}, that is, a total of 11 symbols, the mapping data on the eight symbols is mapped in sequence to the last eight symbols in the first symbol set, that is, symbols 5 to 12, the mapping data on the first three symbols among the eight symbols is mapped in sequence to the first three symbols in the first symbol set (that is, symbols 1 to 3), symbol 0 replicates the data on symbol 1, and symbol 4 replicates the data on symbol 5.

That is, in this example, Aₘ=1 may be considered as being calculated according to N-m+1=2-2+1=1, that is, each candidate start symbol is an AGC symbol.

Similarly, the UE maps the mapping data generated on the eight symbols to the 13 symbols starting from symbol 0 in another manner below. The mapping data on the eight symbols is mapped in sequence to symbols 5 to 12, the mapping data on the first four symbols among the eight symbols is mapped in sequence to symbols 0 to 3, and the data on symbol 4 is replicated from symbol 5. In this manner, "mapping the mapping data on the first four symbols among the eight symbols in sequence to symbols 0 to 3" may also be understood as that after the data is mapped to symbols 5 to 8 (or symbols 8 to 5), the data on symbols 5 to 8 (or symbols 8 to 5) is mapped (or replicated) to symbols 0 to 3. In this manner, symbol 0 does not replicate the data on symbol 1.

### Example four

FIG. 7 is a schematic diagram of a fourth type of data mapping according to an embodiment. As shown in FIG. 7, the UE maps the mapping data generated on the eight symbols to 13 consecutive symbols starting from symbol 0 in the following manner: the mapping data on the eight symbols is mapped in sequence to symbols 5 to 12; and the mapping data on the last three symbols (symbols 10 to 12 or 12 to 10) among the eight symbols is mapped in sequence to symbols 1 to 3 (that is, the second to the fourth symbols among the 13 symbols). It may also be regarded as that after the data is mapped to symbols 10 to 12, the data on symbols 10 to 12 (or 12 to 10) is mapped (or replicated) in sequence to symbols 1 to 3, symbol 0 replicates the data on symbol 1, and symbol 4 replicates the data on symbol 5.

The mapping manner of this example may also be understood as below. The first and second candidate start symbols (symbols 0 and 4) are removed from the 13 consecutive symbols starting from the first candidate start symbol to obtain a first symbol set, that is, {symbols 1 to 3 and symbols 5 to 12}, that is, a total of 11 symbols, the mapping data on the eight symbols is mapped in sequence to the last eight symbols in the first symbol set, that is, symbols 5 to 12, the mapping data on the last three symbols among the eight symbols is mapped in sequence to the first three symbols in the first symbol set (that is, symbols 1 to 3), symbol 0 replicates the data on symbol 1, and symbol 4 replicates the data on symbol 5.

That is, in this example, Aₘ=1 may be considered as being calculated according to N-m+1=2-2+1=1, that is, each candidate start symbol is an AGC symbol.

Similarly, the UE maps the mapping data generated on the eight symbols to the 13 symbols starting from symbol 0 in another manner below. The mapping data on the eight symbols is mapped in sequence to symbols 5 to 12, the mapping data on the last four symbols among the eight symbols is mapped in sequence to symbols 0 to 3, and symbol 4 replicates the data on symbol 5. In this manner, "mapping the mapping data on the last four symbols among the eight symbols in sequence to symbols 0 to 3" may also be understood as that after the data is mapped to symbols 9 to 12 (or symbols 12 to 9), the data on symbols 9 to 12 (or symbols 12 to 9) is mapped (or replicated) to symbols 0 to 3. In this manner, symbol 0 does not replicate the data on symbol 1.

### Example five

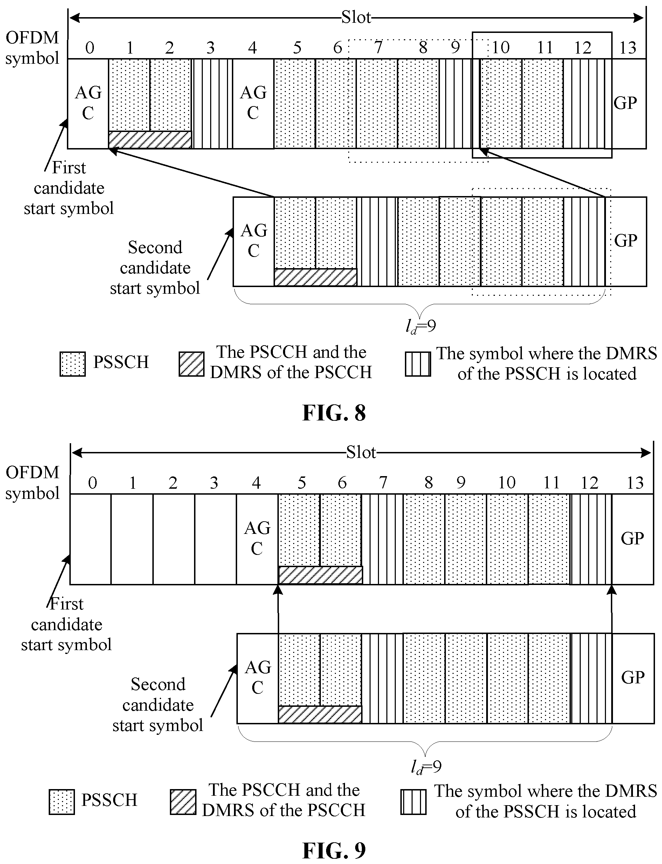

FIG. 8 is a schematic diagram of a fifth type of data mapping according to an embodiment. As shown in FIG. 8, the UE maps the mapping data generated on the eight symbols to the 13 consecutive symbols starting from symbol 0 in the manner below. The first and second candidate start symbols (symbols 0 and 4) are removed from the 13 consecutive symbols starting from the first candidate start symbol to obtain a first symbol set, that is, {symbols 1 to 3 and symbols 5 to 12}, that is, a total of 11 symbols, the mapping data on the eight symbols is mapped in sequence to the first eight symbols in the first symbol set, that is, symbols 1 to 3 and symbols 5 to 9, the mapping data on the last three symbols among the eight symbols is mapped in sequence to the last three symbols in the first symbol set (that is, symbols 10 to 12), symbol 0 replicates the data on symbol 1, and symbol 4 replicates the data on symbol 5.

That is, in this example, Aₘ=1 may be considered as being calculated according to N-m+1=2-2+1=1, that is, each candidate start symbol is an AGC symbol.

### Example six

FIG. 9 is a schematic diagram of a sixth type of data mapping according to an embodiment. As shown in FIG. 9, when n = m = 2, the UE maps the mapping data generated on the eight symbols to nine consecutive symbols starting from symbol 4 in the manner below. The mapping data on the eight symbols is mapped in sequence to symbols 5 to 12, and symbol 4 replicates the data on symbol 5.

### Example seven

The preceding six examples describe the case where the last symbol among the 14 symbols for the SL is used as the GP. For the case where the last symbol is not used as the GP (that is, the last symbol is used for transmitting the PSCCH or PSSCH), assuming that the two cases have the same PSCCH resource configuration, the difference compared to the case where the last symbol is used as the GP is that the total number of symbols for the PSCCH or PSSCH transmission changes from 13 to 14 (that is, L is 14). Assuming that the slot includes two candidate start symbols (which are symbols 0 and 4), the corresponding numbers of symbols for the PSCCH or PSSCH transmission are 14 and 10.

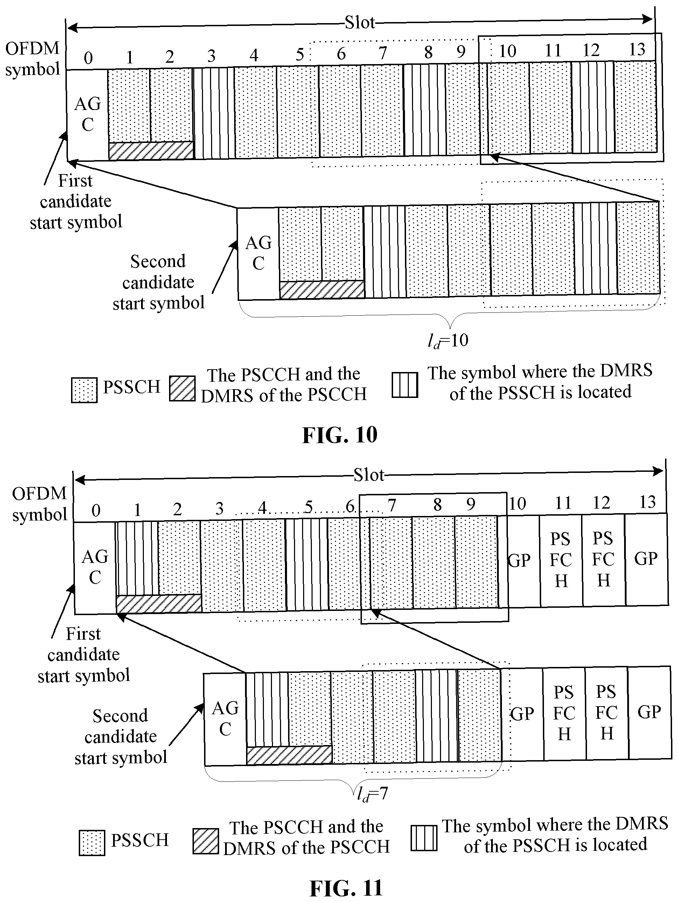

The UE generates the mapping data on nine (that is, Xₘ = X₂ = L₂ - 1 = 9) symbols according to ten (that is, Lₘ = L₂ = 10) consecutive symbols starting from the second (that is, m = 2) candidate start symbol and then maps the mapping data generated on the nine symbols to 14 symbols starting from symbol 0 (that is, symbols 0 to 13) according to a method similar to the methods in examples one to five. The method in example one is used as an example. FIG. 10 is a schematic diagram of a seventh type of data mapping according to an embodiment. Alternatively, the UE maps the mapping data generated on the nine symbols in sequence to ten symbols starting from symbol 4 (that is, symbols 4 to 13) according to a method similar to the method in example six.

In addition, the UE may also generate the mapping data on eight (that is, Xₘ = X₂ = L₂ - 1 = 8) symbols according to nine (that is, Lₘ = L₂ =9) consecutive symbols starting from the second (that is, m = 2) candidate start symbol and then map the mapping data generated on the eight symbols to 13 symbols starting from symbol 0 (that is, symbols 0 to 12) according to the methods in examples one to five, and symbol 13 replicates the data on symbol 12. Alternatively, the UE maps the mapping data generated on the eight symbols to nine symbols starting from symbol 4 (that is, symbols 4 to 12) according to the method in example six, and symbol 13 replicates the data on symbol 12.

In a second possible implementation manner, n is less than m, and the slot includes the PSFCH.

For the slot in the SL resource pool, the UE may be provided with the start symbol for the SL and the number of consecutive symbols for the SL. The start symbol for the SL may be used as the first candidate start symbol. The UE may further be provided with at least one additional candidate start symbol. For the slot including the PSFCH, the total number of symbols for the PSCCH or PSSCH transmission is the total number of symbols for the SL minus 4. For example, for each slot, the configured or preconfigured start symbol for the SL and the configured or preconfigured number of consecutive symbols for the SL are S and L, respectively, and the symbol index corresponding to the k-th candidate start symbol is Sₖ (Sk is greater than or equal to S; and generally, S₁ = S). Then, the total number of symbols for the SL starting from the k-th candidate start symbol is S+L-Sₖ. Therefore, the number Lₖ of symbols for the PSCCH or PSSCH transmission starting from the k-th candidate start symbol satisfies that Lₖ = S + L - Sₖ - 4. That is, the indexes of the Lₖ symbols for the PSCCH or PSSCH transmission starting from the k-th candidate start symbol are Sₖ, Sₖ+1, ..., and S+L-5, where k = 1, 2, ..., or N, that is, symbols S+L-4 to S+L-1 are not used for transmitting the PSCCH or PSSCH, that is, the last four symbols among the symbols for the SL are not used for transmitting the PSCCH or PSSCH. Generally, these four symbols are the GP symbol (for example, used for the transition between PSSCH reception/transmission to PSFCH transmission/reception in the slot), the PSFCH symbol for AGC (for example, the data on the symbol is a replication of the data on the PSFCH symbol), the PSFCH symbol, and the GP symbol (for example, used for the transition between PSFCH reception/transmission and PSSCH transmission/reception in the next slot). Alternatively, the total number of symbols for the PSCCH or PSSCH transmission is the total number of symbols for the SL minus 3. For example, for each slot, the configured or preconfigured start symbol for the SL and the configured or preconfigured number of consecutive symbols for the SL are S and L, respectively, and the symbol index corresponding to the k-th candidate start symbol is Sₖ (Sk is greater than or equal to S; and generally, S₁ = S). Then, the total number of symbols for the SL starting from the k-th candidate start symbol is S+L-Sₖ. Therefore, the number Lₖ of symbols for the PSCCH or PSSCH transmission starting from the k-th candidate start symbol satisfies that Lₖ = S + L - Sₖ - 3. That is, the indexes of the Lₖ symbols for the PSCCH or PSSCH transmission starting from the k-th candidate start symbol are Sₖ, Sₖ+1, ..., and S+L-4, where k = 1, 2, ..., or N, that is, symbols S+L-3 to S+L-1 are not used for transmitting the PSCCH or PSSCH, that is, the last three symbols among the symbols for the SL are not used for transmitting the PSCCH or PSSCH, but the fourth to last symbol is used for transmitting the PSCCH or PSSCH. This case is suitable for the case where the UE transmits the PSCCH or PSSCH and PFSCH simultaneously in the slot or transmits the PSCCH or PSSCH and PFSCH continuously in multiple slots, thereby improving the resource utilization rate.

In this implementation manner, the start symbol S for the SL and the number L of consecutive symbols for the SL in the slot are 0 and 14, respectively, that is, all 14 symbols can be used for the SL, and the total number of symbols for the PSCCH or PSSCH transmission is 10, that is, the GP symbol and the PSFCH symbol are not included. Here, the total number of symbols for the PSCCH or PSSCH transmission being 10 refers to the total number of symbols potentially for the PSCCH or PSSCH transmission. The symbols used in actual transmission may be determined according to the candidate start symbol. For the specific example, reference may be made to the first possible implementation manner.

FIG. 11 is a schematic diagram of an eighth type of data mapping according to an embodiment. As shown in FIG. 11, the slot includes two candidate start symbols, and the first and second candidate start symbols are symbols 0 and 3, that is, the corresponding numbers of symbols for the PSCCH or PSSCH transmission are 10 (that is, L₁ = 10) and 7 (that is, L₂ = 7).

In this implementation manner, Aₘ = 1 (or Aₘ = N - m + 1), and the UE generates the mapping data on six (that is, X₂ = L₂ - 1 = 6) symbols according to seven consecutive symbols starting from the second (that is, m = 2) candidate start symbol. It may also be understood as that the UE generates the mapping data on six symbols (that is, symbols 4 to 9) according to the assumption that the PSCCH or PSSCH is transmitted on the seven consecutive symbols starting from symbol 3 (that is, the second candidate start symbol). Generally, the first symbol may be regarded as an AGC symbol, and no mapping data needs to be generated. The generation manner is similar to that in the preceding embodiment, and the details are not repeated here.

For example, in a mapping manner similar to the manner in example one, the UE in FIG. 11 may map the mapping data generated on the six symbols to ten symbols starting from symbol 0, that is, the UE may map the mapping data on the six symbols in sequence to symbols 1 to 6 and map the mapping data on the last three symbols among the six symbols in sequence to symbols 7 to 9. It may also be regarded as that after the data is mapped to symbols 4 to 6, the data on symbols 4 to 6 (or 6 to 4) are mapped (or replicated) in sequence to symbols 7 to 9, and the data on symbol 0 is replicated from symbol 1.

In addition, the UE may adopt a mapping manner similar to the manners in examples two to five to map the mapping data generated on the six symbols to ten symbols starting from symbol 0; or the UE may adopt a method similar to the method in example six to map the mapping data generated on the six symbols in sequence to seven symbols starting from symbol 3 (that is, symbols 3 to 9); or the UE may adopt a method similar to the method in example seven to generate the mapping data on six or seven symbols according to the seven symbols starting from symbol 3 and map the mapping data generated on the six or seven symbols to ten symbols starting from symbol 0. Examples are not given one by one here.

In a third possible implementation manner, m is less than N, and when the mapping data on the Xₘ symbols is generated, the last N-m+1 candidate start symbols in the slot are all AGC symbols.

In this implementation manner, the start symbol for the SL and the number of consecutive symbols for the SL in the slot are 0 and 14, respectively, that is, all 14 symbols can be used for the SL, and the total number of symbols for the PSCCH or PSSCH transmission is 13, that is, the last symbol in the slot is used as the GP symbol. Here, the total number of symbols for the PSCCH or PSSCH transmission being 13 refers to the total number of symbols potentially for the PSCCH or PSSCH transmission. The symbols used in actual transmission may be determined according to the candidate start symbol. For the specific example, reference may be made to the first possible implementation manner.

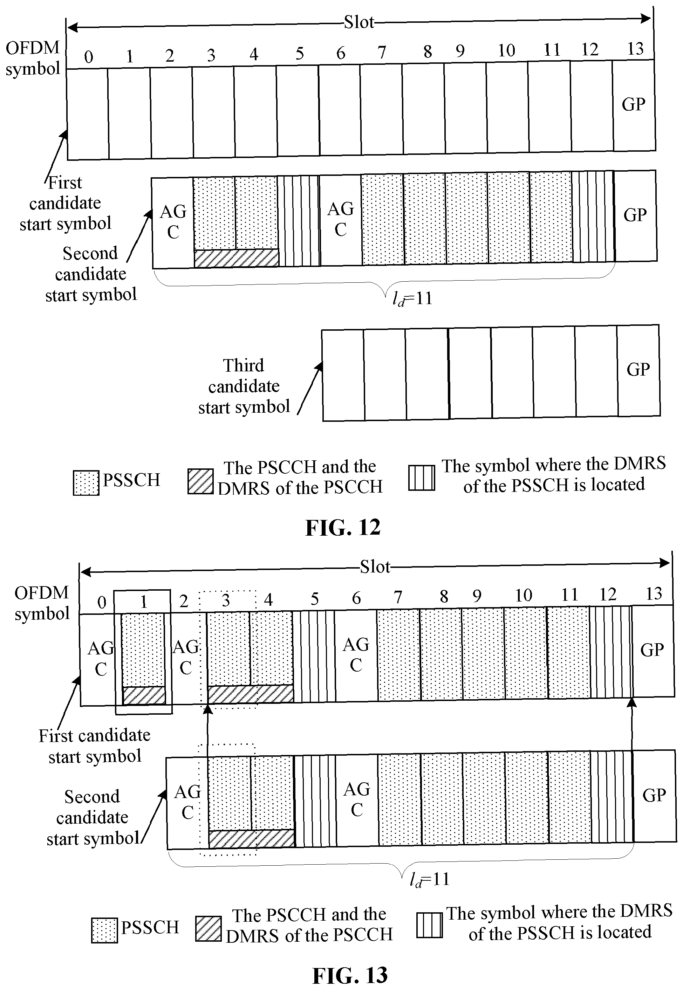

FIG. 12 is a schematic diagram of a ninth type of data mapping according to an embodiment. As shown in FIG. 12, the slot includes three candidate start symbols, and the first, second, and third candidate start symbols are symbols 0, 2, and 6, that is, the corresponding numbers of symbols for the PSCCH or PSSCH transmission are 13 (that is, L₁ = 13), 11 (that is, L₂ = 11), and 7 (that is, L₃ = 7).

In this implementation manner, m = 2, Aₘ = N - m + 1 = 2, and the UE generates the mapping data on nine (that is, X₂ = L₂ - A₂ = 9) symbols according to 11 consecutive symbols starting from the second (that is, m = 2) candidate start symbol. It may also be understood as that the UE generates the mapping data on nine symbols according to the assumption that the PSCCH or PSSCH is transmitted on the 11 consecutive symbols starting from symbol 2 (that is, the second candidate start symbol). In an embodiment, the first and fifth symbols (that is, symbols 2 and 6) starting from the second (that is, m = 2) candidate start symbol may be regarded as AGC symbols, and no mapping data needs to be generated.

For the manner of mapping the mapping data generated on nine symbols to 13 symbols starting from the first candidate start symbol, reference may be made to examples three to five or the second possible implementation manner. Example three is used as an example. FIG. 13 is a schematic diagram of a tenth type of data mapping according to an embodiment. As shown in FIG. 13, the UE maps the mapping data generated on nine symbols to 13 symbols starting from symbol 0 in the manner below. The mapping data on the nine symbols are mapped in sequence to symbols 3 to 5 and symbols 7 to 12, the mapping data on the first symbol among the nine symbols is mapped to symbol 1, or after the data is mapped to symbol 3, the data on symbol 3 is mapped to symbol 1, and the data on symbols 0, 2, and 6 is replicated from symbols 1, 3, and 7.

The mapping manners similar to those in examples four and five and the second possible implementation manner are not repeated here.

In another example, the UE may map the mapping data generated on the nine symbols to 13 symbols (that is, symbols 0 to 12) starting from the first (that is, n = 1) candidate start symbol (that is, symbol 0). Specifically, the first, second, and third candidate start symbols are removed from the 13 symbols starting from the first candidate start symbol (that is, symbol 0) to obtain a first symbol set, that is, {symbol 1, symbols 3 to 5, and symbols 7 to 12}, that is, a total of ten symbols, the mapping data generated on the nine symbols is mapped in sequence to symbol 1, symbols 3 to 5, and symbols 7 to 11, the generated mapping data on the last symbol among the nine symbols is mapped to symbol 12 (or the mapping data on symbol 11 to which data has been mapped is replicated to symbol 12), and each of the first, second, and third candidate start symbols replicates the data on the respective next symbol.

In another example, the UE may map the mapping data generated on the nine symbols to seven symbols (that is, symbols 6 to 12) starting from the third (that is, n = 3) candidate start symbol (that is, symbol 6). Specifically, the first six symbols among the nine symbols are mapped to symbols 7 to 12, and symbol 6 replicates the data on symbol 7.

In another example, the UE may map the mapping data generated on the nine symbols to 11 symbols (that is, symbols 2 to 12) starting from the second (that is, n = 2) candidate start symbol (that is, symbol 2). Specifically, the nine symbols are mapped in sequence to symbols 3 to 5 and symbols 7 to 12, symbol 2 replicates the data on symbol 3, and symbol 6 replicates the data on symbol 7.

When the start symbol for the SL and the number of consecutive symbols for the SL in the slot are other values, or the last symbol in the slot is not used as the GP, or the slot includes the PSFCH, or Aₘ = N - m + 1, the manner in which the UE generates the mapping data starting from the second (that is, m = 2) candidate start symbol and maps the generated mapping data to L₁ symbols starting from the first (that is, n = 1) candidate start symbol or to L₃ symbols starting from the third candidate start symbol may be implemented in conjunction with the first and second possible implementation manners and this implementation manner, and examples are not given one by one here.

In a fourth possible implementation manner, n is greater than m.

In this implementation manner, the start symbol for the SL and the number of consecutive symbols for the SL in the slot are 0 and 14, respectively, that is, all 14 symbols can be used for the SL, and the total number of symbols for the PSCCH or PSSCH transmission is 13, that is, the last symbol in the slot is used as the GP symbol. Here, the total number of symbols for the PSCCH or PSSCH transmission being 13 refers to the total number of symbols potentially for the PSCCH or PSSCH transmission. The symbols used in actual transmission may be determined according to the candidate start symbol. For the specific example, reference may be made to the first possible implementation manner.

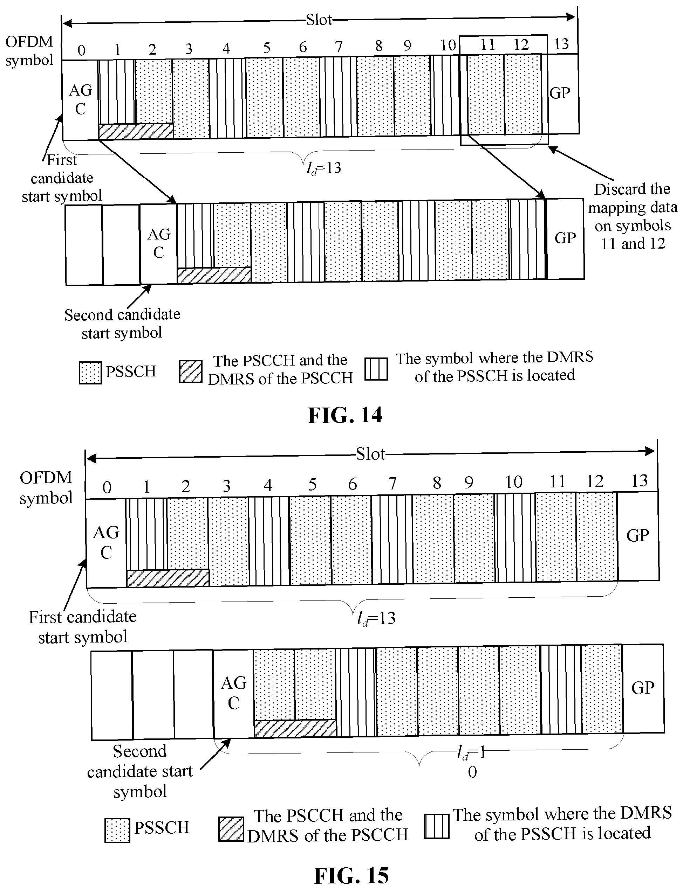

FIG. 14 is a schematic diagram of an eleventh type of data mapping according to an embodiment. As shown in FIG. 14, the slot includes two candidate start symbols (that is, N = 2), and the first and second candidate start symbols are symbols 0 and 2, that is, the corresponding numbers of symbols for the PSCCH or PSSCH transmission are 13 (that is, L₁ = 13) and 11 (that is, L₂ = 11).

In this implementation manner, Aₘ = 1, and the UE generates the mapping data on 12 (that is, X₁ = L₁ - 1 = 12) symbols according to 13 consecutive symbols starting from the first (that is, m = 1) candidate start symbol. It may also be understood as that the UE generates the mapping data on the 12 symbols according to the assumption that the PSCCH or PSSCH is transmitted on the 13 consecutive symbols starting from symbol 0 (that is, the first candidate start symbol). In an embodiment, the first symbol may be regarded as an AGC symbol. The generation manner is similar to that in the preceding embodiment, and the details are not repeated here.

As shown in FIG. 14, the UE maps the mapping data generated on the 12 symbols to 11 symbols starting from symbol 2 (that is, 11 symbols starting from the second candidate start symbol) in the manner below. The mapping data on the first ten symbols among the 12 symbols is mapped in sequence to symbols 3 to 12, the mapping data on the last two symbols among the 12 symbols is discarded, that is, the extra two symbols are punctured, and symbol 2 replicates the data on symbol 3.

When the start symbol for the SL and the number of consecutive symbols for the SL in the slot are other values, or the last symbol in the slot is not used as the GP, or the slot includes the PSFCH, or Aₘ = N - m + 1, the generation and mapping manner of the mapping data may be implemented in conjunction with the first to the third possible implementation manners and a manner similar to this implementation manner. The difference from this implementation manner is mainly the number of symbols for the PSCCH or PSSCH transmission, and examples are not given one by one here.

In a fifth possible implementation manner, the slot includes multiple candidate start symbols. If the UE transmits the PSCCH or PSSCH on the Lₘ consecutive symbols starting from the m-th candidate start symbol, the UE generates the mapping data on the Xₘ symbols according to the Lₘ consecutive symbols starting from the m-th candidate start symbol, that is, the UE generates the mapping data on the Xₘ symbols according to the transmission of the PSCCH or PSSCH on the Lₘ consecutive symbols starting from the m-th candidate start symbol and maps the mapping data on the Xₘ symbols to the Lₘ consecutive symbols starting from the m-th candidate start symbol.

The mapping data on the Xₘ symbols is mapped to the Lₘ consecutive symbols starting from the m-th candidate start symbol in the manner below. Xₘ = Lₘ - 1, the mapping data on the Xₘ symbols is mapped to the second to the Xₘ-th symbols among the Lₘ consecutive symbols starting from the m-th candidate start symbol, and the first symbol among the Lₘ consecutive symbols starting from the m-th candidate start symbol replicates the data on the second symbol.

The mapping data on the Xₘ symbols is mapped to the Lₘ consecutive symbols starting from the m-th candidate start symbol in another manner below. Xₘ = Lₘ - (N - m + 1), the m-th candidate start symbol and the subsequent N-m candidate start symbols are removed from the Lₘ consecutive symbols starting from the m-th candidate start symbol to obtain a symbol set including Xₘ symbols, and the mapping data on the Xₘ symbols is mapped in sequence to the Xₘ symbols in the symbol set, and each of the m-th candidate start symbol and the subsequent N-m candidate start symbols replicates the data on the respective next symbol.

In this implementation manner, the start symbol for the SL and the number of consecutive symbols for the SL in the slot are 0 and 14, respectively, that is, all 14 symbols can be used for the SL, and the total number of symbols for the PSCCH or PSSCH transmission is 13, that is, the last symbol in the slot is used as the GP symbol. Here, the total number of symbols for the PSCCH or PSSCH transmission being 13 refers to the total number of symbols potentially for the PSCCH or PSSCH transmission. The symbols used in actual transmission may be determined according to the candidate start symbol. For the specific example, reference may be made to the first possible implementation manner.

FIG. 15 is a schematic diagram of a twelfth type of data mapping according to an embodiment. As shown in FIG. 15, the first mapping manner is used as an example, the slot includes two candidate start symbols (that is, N = 2), and the first and second candidate start symbols are symbols 0 and 3, that is, the corresponding numbers of symbols for the PSCCH or PSSCH transmission are 13 and 10.

Assuming that the UE is about to transmit the PSCCH or PSSCH from the first candidate start symbol, the UE generates the mapping data on 12 (that is, Xₘ = Lₘ - 1 = 12) symbols starting from the first (that is, m = 1) candidate start symbol, that is, the UE generates the mapping data on the 12 symbols according to the transmission of PSCCH or PSSCH on 13 consecutive symbols starting from symbol 0 (that is, the first candidate start symbol). The generation manner is similar to that in the preceding embodiment, and the details are not repeated here. The UE maps the mapping data generated on the 12 symbols to the 13 symbols starting from symbol 0 (that is n = 1) in the manner below. The mapping data on the 12 symbols is mapped in sequence to symbols 1 to 12, and symbol 0 replicates the data on symbol 1.

Assuming that the UE is about to transmit the PSCCH or PSSCH from the second candidate start symbol, the UE generates the mapping data on 9 (that is, Xₘ = Lₘ - 1 = 9) symbols starting from the second (that is, m = 2) candidate start symbol, that is, the UE generates the mapping data on the 9 symbols according to the transmission of PSCCH or PSSCH on 10 consecutive symbols starting from symbol 3 (that is, the second candidate start symbol). The generation manner is similar to that in the preceding embodiment, and the details are not repeated here. The UE maps the mapping data generated on the 9 symbols to the 10 symbols starting from symbol 3 (that is n = 2) in the manner below. The mapping data on the 9 symbols is mapped in sequence to symbols 4 to 12, and symbol 3 replicates the data on symbol 4.

The first mapping manner is used as an example, the slot includes two candidate start symbols (that is, N = 2), and the first and second candidate start symbols are symbols 0 and 3, that is, the corresponding numbers of symbols for the PSCCH or PSSCH transmission are 13 and 10.

Assuming that the UE is about to transmit the PSCCH or PSSCH from the first candidate start symbol, the UE generates the mapping data on 11 (that is, Xₘ = Lₘ - (N - m + 1) = 11) symbols starting from the first (that is, m = 1) candidate start symbol, that is, the UE generates the mapping data on the 11 symbols according to the transmission of PSCCH or PSSCH on 13 consecutive symbols starting from symbol 0 (that is, the first candidate start symbol). The generation manner is similar to that in the preceding embodiment, and the details are not repeated here. The UE maps the mapping data generated on the 11 symbols to the 13 symbols starting from symbol 0 (that is n = 1) in the manner below. The mapping data on the 11 symbols is mapped in sequence to symbol 1, symbol 2, and symbols 4 to 12, symbol 0 replicates the data on symbol 1, and symbol 3 replicates the data on symbol 4.

Assuming that the UE is about to send the PSCCH or PSSCH from the first candidate start symbol, the UE generates the mapping data on nine (that is, Xₘ = Lₘ - (N - m + 1) = 9) symbols starting from the second (that is, m = 2) candidate start symbol, and the UE maps the mapping data generated on the nine symbols to ten symbols starting from symbol 3 (that is, n = 2) in the manner below. The mapping data on the nine symbols is mapped in sequence to symbols 4 to 12, and symbol 3 replicates the data on symbol 4.

When the start symbol for the SL and the number of consecutive symbols for the SL in the slot are other values, or the last symbol in the slot is not used as the GP, or the slot includes the PSFCH, or Aₘ = N - m + 1, the manner in which the UE generates the mapping data starting from the k-th candidate start symbol and maps the generated mapping data to Lₖ symbols starting from the k-th candidate start symbol may be implemented in conjunction with the first to the third possible implementation manners and this implementation manner. The difference from this implementation manner is mainly the number of symbols for the PSCCH or PSSCH transmission for each candidate start symbol, and examples are not given one by one here.

In an embodiment, the information carried by the PSSCH transmitted by the UE starting from the first candidate start symbol includes the information carried by the PSSCH transmitted by the UE starting from the second candidate start symbol.

In a sixth possible implementation manner, the start symbol for the SL and the number of consecutive symbols for the SL in the slot are 0 and 14, respectively, that is, all 14 symbols can be used for the SL, and the total number of symbols for the PSCCH or PSSCH transmission is 13, that is, the last symbol in the slot is used as the GP symbol. Here, the total number of symbols for the PSCCH or PSSCH transmission being 13 refers to the total number of symbols potentially for the PSCCH or PSSCH transmission. The symbols used in actual transmission may be determined according to the candidate start symbol. For the specific example, reference may be made to the first possible implementation manner.

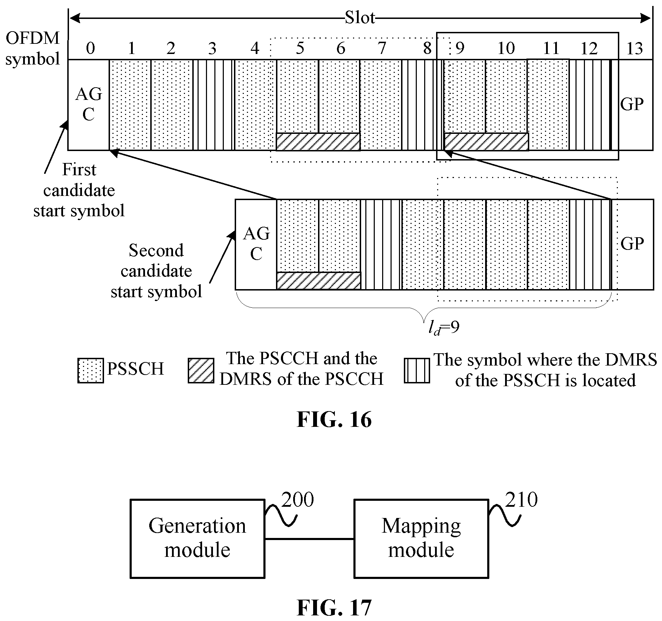

FIG. 16 is a schematic diagram of a thirteenth type of data mapping according to an embodiment. As shown in FIG. 16, the slot includes two candidate start symbols (that is, N = 2), and the first and second candidate start symbols are symbols 0 and 4, that is, the corresponding numbers of symbols for the PSCCH or PSSCH transmission are 13 (that is, L₁ = 13) and 9 (that is, L₂ = 9).

In this implementation manner, Aₘ = 1, m = 2, and the UE generates the mapping data on eight (that is, X₂ = L₂ - 1 = 8) symbols according to nine consecutive symbols starting from the second (that is, m = 2) candidate start symbol. It may also be understood as that the UE generates the mapping data on the eight symbols according to the assumption that the PSCCH or PSSCH is transmitted on the nine consecutive symbols starting from symbol 4 (that is, the second candidate start symbol). The generation manner is similar to that in the preceding embodiment, and the details are not repeated here.

As shown in FIG. 16, the UE maps the mapping data generated on the eight symbols to 13 symbols starting from symbol 0 in the manner below. The data about the PSCCH and the DMRS thereof on two symbols among the eight symbols is mapped in sequence to symbols 5 and 6, the remaining mapping data on the eight symbols is mapped to symbols 1 to 8, and then the data on symbols 5 to 8 (or symbols 8 to 5) is mapped (replicated) in sequence to symbols 9 to 12, or the data on symbols 1 to 4 (or symbols 4 to 1) is mapped (replicated) in sequence to symbols 9 to 12.

In an embodiment, the data about the PSCCH and the DMRS thereof on two symbols among the eight symbols is mapped in sequence to symbols 5 and 6, and data about the DMRS of the PSSCH on two symbols among the eight symbols is mapped in sequence to symbols 3 and 8. If the reference signal (for example, the CSI-RS, the PRS, or the PTRS) exists in the mapping data on the nine symbols, the reference signal among the eight symbols is mapped in sequence to symbols 1 to 8, the modulation symbols of the second-stage SL control among the eight symbols starting from the first symbol including the DMRS of the PSSCH are mapped to resources not occupied by the DMRS and the PTRS or by the PSCCH and the DMRS, the modulation symbols of the PSSCH and the DMRS data thereof among the eight symbols are mapped in sequence to symbols 1 to 8, and the data on symbols 5 to 8 (or symbols 8 to 5) is mapped (or replicated) in sequence to symbols 9 to 12, and symbol 0 replicates the data on symbol 1.

In this implementation manner, when the PSSCH and the associated PSCCH are transmitted from the first candidate start symbol, the PSCCH is located on symbols 5 and 6, and when the PSSCH and the associated PSCCH are transmitted from the second candidate start symbol, the PSCCH is also located on symbols 5 and 6, that is, the PSCCH position remains unchanged when the PSSCH and the associated PSCCH are transmitted from different candidate start symbols. Considering that in the SL communication, the receiving UE needs to blindly detect the PSCCH, when the transmission of the PSSCH and the associated PSCCH starts from different candidate start symbols, if the symbol positions of the PSCCH in the slot are different, the PSCCH position corresponding to each candidate start symbol must be blindly detected; and if the symbol positions of the PSCCH in the slot are the same, only the PSCCH at the common position needs to be blindly detected, thereby reducing the number of blind detections of the PSCCH by the UE. Since the PSCCH position for different candidate start symbols is on symbols 5 and 6, it is difficult for the receiving UE to determine from which candidate symbol the PSSCH transmission starts according to the PSCCH position. Therefore, the sending UE needs to indicate the start symbol for the PSSCH transmission in the PSCCH.

In the present application, for a slot including N (N > 1) candidate start symbols, the UE determines the start symbol for the PSCCH or PSSCH transmission according to the LBT result. For example, if LBT succeeds at the position of the first candidate start symbol, the UE transmits the PSCCH or PSSCH from the first candidate start symbol; if LBT fails at the position of the first candidate start symbol but succeeds at the position of the second candidate start symbol, the UE transmits the PSCCH or PSSCH from the second candidate start symbol; if LBT fails at the position of the second candidate start symbol but succeeds at the position of the third candidate start symbol, the UE transmits the PSCCH or PSSCH from the third candidate start symbol; and so on. That is, the UE transmits the PSCCH or PSSCH from the candidate start symbol where LBT succeeds for the first time. If LBT fails at all candidate start symbols, the UE does not transmit the PSCCH or PSSCH in the slot.

Generally, the LBT success of the UE at a certain symbol position in the slot means that the UE succeeds to LBT within a given time range before the symbol position; and the LBT failure of the UE at a certain symbol position in the slot means that the UE fails to LBT within a given time range before the symbol position.

The LBT process, that is, the channel access process performed by the UE, means that the UE performs the channel access process for one or more channels. One channel here refers to a carrier formed by one group of consecutive RBs or a portion of the carrier.

FIG. 17 is a diagram illustrating the structure of a data mapping apparatus according to an embodiment. The apparatus may be configured in a communication node. As shown in FIG. 17, the apparatus includes a generation module 200 and a mapping module 210.

The generation module 200 is configured to generate mapping data on Xₘ symbols according to Lₘ consecutive symbols starting from the m-th candidate start symbol.

The mapping module 210 is configured to map the mapping data on the Xₘ symbols to Lₙ consecutive symbols starting from the n-th candidate start symbol.

m and n are each a positive integer less than or equal to N, N denotes the number of candidate start symbols in a slot, N is greater than 1, Xₘ = Lₘ - Aₘ, Aₘ = 1 or Aₘ = N - m + 1, Lₖ denotes the total number of symbols for the PSCCH transmission or PSSCH transmission starting from the k-th candidate start symbol in the slot, and k is a positive integer less than or equal to N.

The data mapping apparatus provided in this embodiment may implement the data mapping method in the preceding embodiments. The data mapping apparatus provided in this embodiment has implementation principles and technical effects that are similar to those of the preceding embodiments, and the details are not repeated here.

In an embodiment, n is less than m, and Xₘ = Lₘ - 1.

The mapping module 210 is configured such that the mapping data on the Xₘ symbols is mapped in sequence to the second to the Lₘ-th symbols among the Lₙ consecutive symbols starting from the n-th candidate start symbol; the mapping data on the specific Lₙ-Lₘ symbols among the Xₘ symbols is mapped in sequence to the last Lₙ-Lₘ symbols among the Lₙ consecutive symbols starting from the n-th candidate start symbol; and the first symbol among the Lₙ consecutive symbols starting from the n-th candidate start symbol replicates the data on the second symbol.

In an embodiment, n is less than m, and Xₘ = Lₘ - 1.

The mapping module 210 is configured such that the mapping data on the specific Lₙ-Lₘ symbols among the Xₘ symbols is mapped in sequence to the first Lₙ-Lₘ symbols among the Lₙ consecutive symbols starting from the n-th candidate start symbol; the mapping data on the Xₘ symbols is mapped in sequence to the last Lₘ-1 symbols among the Lₙ consecutive symbols starting from the n-th candidate start symbol; and the (Lₙ-Lₘ+1)-th symbol among the Lₙ consecutive symbols starting from the n-th candidate start symbol replicates the data on the (Lₙ-Lₘ+2)-th symbol.

In an embodiment, n is less than m, and Xₘ = Lₘ - 1.

The mapping module 210 is configured such that the mapping data on the specific Lₙ-Lₘ symbols among the Xₘ symbols is mapped in sequence to the second to the (Lₙ-Lₘ+1)-th symbols among the Lₙ consecutive symbols starting from the n-th candidate start symbol; the mapping data on the Xₘ symbols is mapped in sequence to the last Lₘ-1 symbols among the Lₙ consecutive symbols starting from the n-th candidate start symbol; and the first symbol among the Lₙ consecutive symbols starting from the n-th candidate start symbol replicates the data on the second symbol.

In an embodiment, the specific Lₙ-Lₘ symbols among the Xₘ symbols include one of the following:
The last Lₙ-Lₘ symbols among the Xₘ symbols;
The first Lₙ-Lₘ symbols among the Xₘ symbols;
Configured or predefined Lₙ-Lₘ symbols among the Xₘ symbols.

In an embodiment, n is less than m, and Xₘ = Lₘ - (N-m+1).

The mapping module 210 is configured such that the n-th candidate start symbol and the subsequent N-n candidate start symbols are removed from the Lₙ consecutive symbols starting from the n-th candidate start symbol to obtain a first symbol set, and the first symbol set includes Xₙ symbols; the mapping data on the Xₘ symbols is mapped in sequence to the last Xₘ symbols in the first symbol set; the mapping data on the specific Xₙ-Xₘ symbols among the Xₘ symbols is mapped in sequence to the first Xₙ-Xₘ symbols in the first symbol set; and each of the n-th candidate start symbol and the subsequent N-n candidate start symbols among the Lₙ consecutive symbols starting from the n-th candidate start symbol replicates the data on the respective next symbol.

In an embodiment, n is less than m, and Xₘ = Lₘ - (N-m+1).

The mapping module 210 is configured such that the n-th candidate start symbol and the subsequent N-n candidate start symbols are removed from the Lₙ consecutive symbols starting from the n-th candidate start symbol to obtain a first symbol set, and the first symbol set includes Xₙ symbols; the mapping data on the Xₘ symbols is mapped in sequence to the first Xₘ symbols in the first symbol set; the mapping data on the specific Xₙ-Xₘ symbols among the Xₘ symbols is mapped in sequence to the last Xₙ-Xₘ symbols in the first symbol set; and each of the n-th candidate start symbol and the subsequent N-n candidate start symbols among the Lₙ consecutive symbols starting from the n-th candidate start symbol replicates the data on the respective next symbol.

In an embodiment, the specific Xₙ-Xₘ symbols among the Xₘ symbols include one of the following:
The last Xₙ-Xₘ symbols among the Xₘ symbols;
The first Xₙ-Xₘ symbols among the Xₘ symbols;
Configured or predefined Xₙ-Xₘ symbols among the Xₘ symbols.

In an embodiment, n is equal to m, and Xₘ = Lₘ - 1.

The mapping module 210 is configured such that the mapping data on the Xₘ symbols is mapped in sequence to the second to the Lₘ-th symbols among the Lₘ consecutive symbols starting from the m-th candidate start symbol; and the first symbol among the Lₘ consecutive symbols starting from the m-th candidate start symbol replicates the data on the second symbol.

In an embodiment, n is equal to m, and Xₘ = Lₘ - (N-m+1).

The mapping data 210 is configured such that the m-th candidate start symbol and the subsequent N-m candidate start symbols are removed from the Lₘ consecutive symbols starting from the m-th candidate start symbol to obtain a second symbol set, where the second symbol set includes Xₘ symbols; the mapping data on the Xₘ symbols is mapped in sequence to the Xₘ symbols in the second symbol set; and each of the m-th candidate start symbol and the subsequent N-m candidate start symbols among the Lₘ consecutive symbols starting from the m-th candidate start symbol replicates the data on the respective next symbol.

In an embodiment, n is greater than m, and Xₘ = Lₘ - 1.

The mapping data 210 is configured such that the mapping data on the specific Xₙ symbols among the Xₘ symbols is mapped in sequence to the second to the Lₙ-th symbols among the Lₙ consecutive symbols starting from the n-th candidate start symbol; and the first symbol among the Lₙ consecutive symbols starting from the n-th candidate start symbol replicates the data on the second symbol.

In an embodiment, n is greater than m, and Xₘ = Lₘ - (N-m+1).

The mapping module 210 is configured such that the n-th candidate start symbol and the subsequent N-n candidate start symbols are removed from the Lₙ consecutive symbols starting from the n-th candidate start symbol to obtain a first symbol set, where the first symbol set includes Xₙ symbols; the mapping data on the specific Xₙ symbols among the Xₘ symbols is mapped in sequence to the Xₙ symbols in the first symbol set; and each of the n-th candidate start symbol and the subsequent N-n candidate start symbols among the Lₙ consecutive symbols starting from the n-th candidate start symbol replicates the data on the respective next symbol.

In an embodiment, the specific Xₙ symbols among the Xₘ symbols include one of the following:
The first Xₙ symbols among the Xₘ symbols;
The last Xₙ symbols among the Xₘ symbols;
Configured or predefined Xₙ symbols among the Xₘ symbols.

In an embodiment, m is equal to 1; m is equal to N; m is a configured or preconfigured value; or the value of m is indicated by the SL control information.

In an embodiment, the symbol positions of the PSCCH in the slot are determined in any of the manners below.

The symbol positions of the PSCCH in the slot are Y symbols starting from the next symbol of the N-th candidate start symbol in the slot.

The symbol positions of the PSCCH in the slot are configured or preconfigured.

An embodiment of the present application further provides a communication node. The communication node includes a processor configured to perform the method provided in any embodiment of the present application when executing a computer program. Specifically, the communication node may be the UE provided in any embodiment of the present application, which is not specifically limited in the present application.

For example, the following embodiments provide a structural diagram of a UE as the communication node and a structural diagram of a base station (or a higher-layer entity) as the communication node.

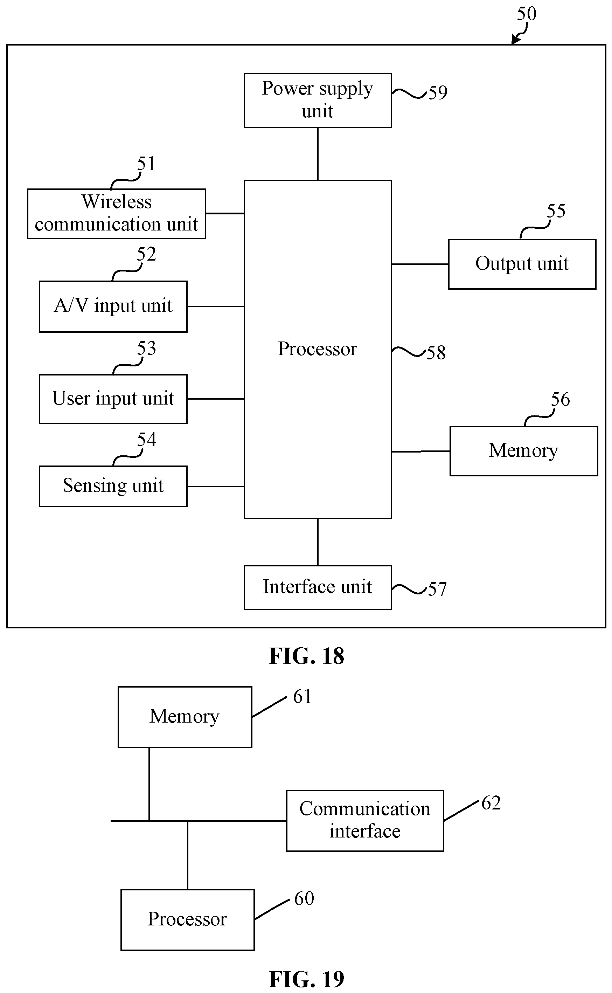

FIG. 18 is a diagram illustrating the structure of a UE according to an embodiment. The UE may be implemented in multiple forms. The UE in the present application may include, but is not limited to, a mobile terminal device such as a mobile phone, a smartphone, a notebook computer, a digital broadcast receiver, a personal digital assistant (PDA), a portable device (PAD), a portable media player (PMP), a navigation apparatus, a vehicle-mounted terminal device, a vehicle-mounted display terminal, or a vehicle-mounted electronic rearview mirror or a fixed terminal device such as a digital television (TV) or a desktop computer.

As shown in FIG. 18, a UE 50 may include a wireless communication unit 51, an audio/video (A/V) input unit 52, a user input unit 53, a sensing unit 54, an output unit 55, a memory 56, an interface unit 57, a processor 58, and a power supply unit 59. FIG. 18 shows the UE including multiple components. However, it is to be understood that not all the shown components are required to be implemented. More or fewer components may be implemented instead.

In this embodiment, the wireless communication unit 51 allows wireless communications between the UE 50 and a UE, a base station, or a network. The A/V input unit 52 is configured to receive audio/video signals. The user input unit 53 may generate key input data according to commands input by a user to control various operations of the UE 50. The sensing unit 54 detects a current state of the UE 50, a position of the UE 50, touch input of the user into the UE 50, an orientation of the UE 50, acceleration or deceleration of the UE 50, a direction of acceleration or deceleration of the UE 50, and the like and generates commands or signals for controlling operations of the UE 50. The interface unit 57 serves as an interface through which at least one external apparatus can be connected to the UE 50. The output unit 55 is configured to provide output signals in visual, audio, and/or tactile manners. The memory 56 may store software programs and the like for processing and control operations performed by the processor 58 or may temporarily store data that has been output or is to be output. The memory 56 may include at least one type of storage medium. Moreover, the UE 50 may cooperate with a network storage apparatus that performs the storage function of the memory 56 through a network connection. The processor 58 is generally configured to control an overall operation of the UE 50. Under the control of the processor 58, the power supply unit 59 receives external power or internal power and provides appropriate power required for operating various elements and components.

The processor 58 executes programs stored in the memory 56 to perform at least one function application and data processing, for example, to perform the method of an embodiment of the present application.

FIG. 19 is a diagram illustrating the structure of a base station (or a higher-layer entity) according to an embodiment. As shown in FIG. 19, the base station includes a processor 60, a memory 61, and a communication interface 62. One or more processors 60 may be provided in the base station, and one processor 60 is shown as an example in FIG. 19. The processor 60, the memory 61, and the communication interface 62 in the base station may be connected via a bus or in other manners. In FIG. 19, the connection via a bus is shown as an example. The bus represents one or more of several types of bus structures, including a memory bus or a memory controller, a peripheral bus, an Accelerated Graphics Port (AGP), a processor, and a local bus using any bus structure among multiple bus structures.

As a computer-readable storage medium, the memory 61 may be configured to store software programs, computer-executable programs, and modules, such as program instructions/modules corresponding to the method in an embodiment of the present application. The processor 60 executes software programs, instructions, and modules stored in the memory 61 to perform at least one function application and data processing of the base station, that is, to perform the preceding method.

The memory 61 may include a program storage region and a data storage region, where the program storage region may store an operating system and an application program required by at least one function, and the data storage region may store data created depending on the use of a terminal. Additionally, the memory 61 may include a high-speed random-access memory and may also include a nonvolatile memory such as at least one disk memory, a flash memory, or another nonvolatile solid-state memory. In some examples, the memory 61 may be a memory remote from the processor 60 and connectable to the base station by a network. Examples of the preceding network include, but are not limited to, the Internet, an intranet, a network, a mobile communication network, and a combination thereof.

The communication interface 62 may be configured to receive and send data.

An embodiment of the present application provides a computer-readable storage medium. The computer-readable storage medium stores a computer program which, when executed by a processor, causes the processor to perform the method of any embodiment of the present application.

A computer storage medium of an embodiment of the present application may be one computer-readable medium or any combination of multiple computer-readable media. The computer-readable medium may be a computer-readable signal medium or a computer-readable storage medium. For example, the computer-readable storage medium may be, but is not limited to, an electrical, magnetic, optical, electromagnetic, infrared, or semiconductor system, apparatus, or device or any combination thereof. The computer-readable storage medium includes (a non-exhaustive list) an electrical connection having one or more wires, a portable computer disk, a hard disk, a random access memory (RAM), a read-only memory (ROM), an electrically erasable programmable read-only memory (EPROM), a flash memory, an optical fiber, a portable compact disk read-only memory (CD-ROM), an optical memory, a magnetic memory, or any suitable combination thereof. In the present application, the computer-readable storage medium may be any tangible medium including or storing a program. The program may be used by or used in conjunction with an instruction execution system, apparatus, or device.

The computer-readable signal medium may include a data signal propagated in a baseband or as part of a carrier. The data signal carries computer-readable program codes. The data signal propagated in this manner may be in multiple forms and includes, but is not limited to, an electromagnetic signal, an optical signal, or any appropriate combination thereof. The computer-readable signal medium may also be any computer-readable medium other than the computer-readable storage medium. The computer-readable medium may send, propagate, or transmit a program used by or used in conjunction with an instruction execution system, apparatus, or device.

Program codes included in the computer-readable medium may be transmitted by using any appropriate medium including, but not limited to, a wireless medium, a wire, an optical cable, a radio frequency (RF), or any appropriate combination thereof.

Computer program codes for performing operations of the present disclosure may be written in one programming language or a combination of multiple programming languages. The programming languages include object-oriented programming languages (such as Java, Smalltalk, C++, Ruby, and Go) and conventional procedural programming languages (such as "C" and similar programming languages). The program codes may be executed entirely on a user computer, executed partly on a user computer, executed as a stand-alone software package, executed partly on a user computer and partly on a remote computer, or executed entirely on a remote computer or a server. In the case relating to the remote computer, the remote computer may be connected to the user computer via any type of network (including a local area network (LAN) or a wide area network (WAN)) or may be connected to an external computer (for example, via the Internet through an Internet service provider).

It is to be understood by those skilled in the art that the term "user equipment" encompasses any appropriate type of wireless user device, such as a mobile phone, a portable data processing apparatus, a portable web browser, or an in-vehicle mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented by using any appropriate data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A data mapping method, comprising:
generating mapping data on Xₘ symbols according to Lₘ consecutive symbols starting from an m-th candidate start symbol; and
mapping the mapping data on the Xₘ symbols to Lₙ consecutive symbols starting from an n-th candidate start symbol;
wherein m and n are each a positive integer less than or equal to N, N denotes a number of candidate start symbols in a slot, N is greater than 1, Xₘ = Lₘ - Aₘ, Aₘ = 1 or Aₘ = N - m + 1, Lₖ denotes a total number of symbols for physical sidelink control channel, PSCCH, transmission or physical sidelink shared channel, PSSCH, transmission starting from a k-th candidate start symbol in the slot, and k is a positive integer less than or equal to N.

2. The method of claim 1, wherein n is less than m, Xₘ = Lₘ - 1, and mapping the mapping data on the Xₘ symbols to the Lₙ consecutive symbols starting from the n-th candidate start symbol comprises:
mapping the mapping data on the Xₘ symbols in sequence to a second to an Lₘ-th symbols among the Lₙ consecutive symbols starting from the n-th candidate start symbol;
mapping mapping data on specific Lₙ-Lₘ symbols among the Xₘ symbols in sequence to last Lₙ-Lₘ symbols among the Lₙ consecutive symbols starting from the n-th candidate start symbol; and
replicating, by a first symbol among the Lₙ consecutive symbols starting from the n-th candidate start symbol, data on a second symbol.

3. The method of claim 1, wherein n is less than m, Xₘ = Lₘ - 1, and mapping the mapping data on the Xₘ symbols to the Lₙ consecutive symbols starting from the n-th candidate start symbol comprises:
mapping mapping data on specific Lₙ-Lₘ symbols among the Xₘ symbols in sequence to first Lₙ-Lₘ symbols among the Lₙ consecutive symbols starting from the n-th candidate start symbol;
mapping the mapping data on the Xₘ symbols in sequence to last Lₘ-1 symbols among the Lₙ consecutive symbols starting from the n-th candidate start symbol; and
replicating, by an (Lₙ-Lₘ+1)-th symbol among the Lₙ consecutive symbols starting from the n-th candidate start symbol, data on an (Lₙ-Lₘ+2) symbol.

4. The method of claim 1, wherein n is less than m, Xₘ = Lₘ - 1, and mapping the mapping data on the Xₘ symbols to the Lₙ consecutive symbols starting from the n-th candidate start symbol comprises:
mapping mapping data on specific Lₙ-Lₘ symbols among the Xₘ symbols in sequence to a second to an (Lₙ-Lₘ+1)-th symbols among the Lₙ consecutive symbols starting from the n-th candidate start symbol;
mapping the mapping data on the Xₘ symbols in sequence to last Lₘ-1 symbols among the Lₙ consecutive symbols starting from the n-th candidate start symbol; and
replicating, by a first symbol among the Lₙ consecutive symbols starting from the n-th candidate start symbol, data on a second symbol.

5. The method of any one of claims 2 to 4, wherein the specific Lₙ-Lₘ symbols among the Xₘ symbols comprise one of the following:
last Lₙ-Lₘ symbols among the Xₘ symbols;
first Lₙ-Lₘ symbols among the Xₘ symbols; or
configured or predefined Lₙ-Lₘ symbols among the Xₘ symbols.

6. The method of claim 1, wherein n is less than m, Xₘ = Lₘ - (N - m + 1), and mapping the mapping data on the Xₘ symbols to the Lₙ consecutive symbols starting from the n-th candidate start symbol comprises:
removing the n-th candidate start symbol and subsequent N-n candidate start symbols from the Lₙ consecutive symbols starting from the n-th candidate start symbol to obtain a first symbol set, wherein the first symbol set comprises Xₙ symbols;
mapping the mapping data on the Xₘ symbols in sequence to last Xₘ symbols in the first symbol set;
mapping mapping data on specific Xₙ-Xₘ symbols among the Xₘ symbols in sequence to first Xₙ-Xₘ symbols in the first symbol set; and
replicating, by each of the n-th candidate start symbol and the subsequent N-n candidate start symbols among the Lₙ consecutive symbols starting from the n-th candidate start symbol, data on a respective next symbol.

7. The method of claim 1, wherein n is less than m, Xₘ = Lₘ - (N - m + 1), and mapping the mapping data on the Xₘ symbols to the Lₙ consecutive symbols starting from the n-th candidate start symbol comprises:
removing the n-th candidate start symbol and subsequent N-n candidate start symbols from the Lₙ consecutive symbols starting from the n-th candidate start symbol to obtain a first symbol set, wherein the first symbol set comprises Xₙ symbols;
mapping the mapping data on the Xₘ symbols in sequence to first Xₘ symbols in the first symbol set;
mapping mapping data on Xₙ-Xₘ symbols among the Xₘ symbols in sequence to last Xₙ-Xₘ symbols in the first symbol set; and
replicating, by each of the n-th candidate start symbol and the subsequent N-n candidate start symbols among the Lₙ consecutive symbols starting from the n-th candidate start symbol, data on a respective next symbol.

8. The method of claim 6 or 7, wherein the specific Xₙ-Xₘ symbols among the Xₘ symbols comprise one of the following:
last Xₙ-Xₘ symbols among the Xₘ symbols;
first Xₙ-Xₘ symbols among the Xₘ symbols; or
configured or predefined Xₙ-Xₘ symbols among the Xₘ symbols.

9. The method of claim 1, wherein n is equal to m, Xₘ = Lₘ - 1, and mapping the mapping data on the Xₘ symbols to the Lₙ consecutive symbols starting from the n-th candidate start symbol comprises:
mapping the mapping data on the Xₘ symbols in sequence to a second to an Lₘ-th symbols among the Lₘ consecutive symbols starting from the m-th candidate start symbol; and
replicating, by a first symbol among the Lₘ consecutive symbols starting from the m-th candidate start symbol, data on a second symbol.

10. The method of claim 1, wherein n is equal to m, Xₘ = Lₘ - (N - m + 1), and mapping the mapping data on the Xₘ symbols to the Lₙ consecutive symbols starting from the n-th candidate start symbol comprises:
removing the m-th candidate start symbol and subsequent N-m candidate start symbols from the Lₘ consecutive symbols starting from the m-th candidate start symbol to obtain a second symbol set, wherein the second symbol set comprises Xₘ symbols;
mapping the mapping data on the Xₘ symbols in sequence to Xₘ symbols in the second symbol set; and
replicating, by each of the m-th candidate start symbol and the subsequent N-m candidate start symbols among the Lₘ consecutive symbols starting from the m-th candidate start symbol, data on a respective next symbol.

11. The method of claim 1, wherein n is greater than m, Xₘ = Lₘ - 1, and mapping the mapping data on the Xₘ symbols to the Lₙ consecutive symbols starting from the n-th candidate start symbol comprises:
mapping mapping data on specific Xₙ symbols among the Xₘ symbols in sequence to a second to an Lₙ-th symbols among the Lₙ consecutive symbols starting from the n-th candidate start symbol; and
replicating, by a first symbol among the Lₙ consecutive symbols starting from the n-th candidate start symbol, data on a second symbol.

12. The method of claim 1, wherein n is greater than m, Xₘ = Lₘ - (N - m + 1), and mapping the mapping data on the Xₘ symbols to the Lₙ consecutive symbols starting from the n-th candidate start symbol comprises:
removing the n-th candidate start symbol and subsequent N-n candidate start symbols from the Lₙ consecutive symbols starting from the n-th candidate start symbol to obtain a first symbol set, wherein the first symbol set comprises Xₙ symbols;
mapping mapping data on specific Xₙ symbols among the Xₘ symbols in sequence to the Xₙ symbols in the first symbol set; and
replicating, by each of the n-th candidate start symbol and the subsequent N-n candidate start symbols among the Lₙ consecutive symbols starting from the n-th candidate start symbol, data on a respective next symbol.

13. The method of claim 11 or 12, wherein the specific Xₙ symbols among the Xₘ symbols comprise one of the following:
first Xₙ symbols among the Xₘ symbols;
last Xₙ symbols among the Xₘ symbols; or
configured or predefined Xₙ symbols among the Xₘ symbols.

14. The method of claim 1, wherein m is equal to 1; m is equal to N; m is a configured or preconfigured value; or a value of m is indicated by sidelink control information.

15. The method of claim 1, wherein symbol positions of a PSCCH in the slot are determined in any of the following manners:
the symbol positions of the PSCCH in the slot are Y symbols starting from a next symbol of an N-th candidate start symbol in the slot; or
the symbol positions of the PSCCH in the slot are configured or preconfigured.

16. A communication node comprising a processor configured to perform the data mapping method of any one of claims 1 to 15 when executing a computer program.

17. A computer-readable storage medium storing a computer program which, when executed by a processor, causes the processor to perform the data mapping method of any one of claims 1 to 15.
